(19) Europäisches Patentamt / European Patent Office / Office européen des brevets

(11) **EP 3 877 618 B1**

(12) **EUROPEAN PATENT SPECIFICATION**

(45) Date of publication and mention
of the grant of the patent:
**19.07.2023   Bulletin 2023/29**

(21) Application number: **19794567.8**

(22) Date of filing: **29.10.2019**

(51) International Patent Classification (IPC):
*E06B 3/02* (2006.01)      *E06B 3/36* (2006.01)
*E06B 3/66* (2006.01)      *E06B 3/663* (2006.01)
*E06B 3/673* (2006.01)     *E06B 7/23* (2006.01)

(52) Cooperative Patent Classification (CPC):
**E06B 3/6612; E06B 3/02; E06B 3/025;
E06B 3/362; E06B 3/66; E06B 3/66309;
E06B 3/67326; E06B 7/2305; E06B 7/2309;
E06B 7/2312;** Y02A 30/249; Y02B 80/22

(86) International application number:
**PCT/EP2019/079521**

(87) International publication number:
**WO 2020/094466 (14.05.2020 Gazette 2020/20)**

(54) **WINDOW AND ASSEMBLY COMPRISING A STIFFENED FRAMELESS SASH, AND METHOD FOR PRODUCING A STIFFENED FRAMELESS SASH**

FENSTER UND ANORDNUNG MIT EINEM VERSTEIFTEN RAHMENLOSEN FLÜGEL UND VERFAHREN ZUR HERSTELLUNG EINES VERSTEIFTEN RAHMENLOSEN FLÜGELS

FENÊTRE ET ENSEMBLE COMPRENANT UN CHÂSSIS SANS CADRE RIGIDE ET PROCÉDÉ DE FABRICATION D'UN CHÂSSIS SANS CADRE RIGIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.11.2018   EP 18204330**
**05.02.2019   EP 19155590**

(43) Date of publication of application:
**15.09.2021   Bulletin 2021/37**

(73) Proprietor: **AGC Glass Europe**
**1348 Louvain-La-Neuve (BE)**

(72) Inventors:
• **SCHNEIDER, Pierre**
**37370 Saint-Christophe-sur-le-Nais (FR)**

• **BOUESNARD, Olivier**
**1460 Ittre (BE)**
• **BIR, Raphaël Alain**
**68480 Raedersdorf (FR)**
• **JARRIGE, Sandra**
**5000 Namur (BE)**

(74) Representative: **AGC Glass Europe**
**Technovation Centre**
**Intellectual Property Department**
**Rue Louis Blériot 12**
**6041 Gosselies (BE)**

(56) References cited:
**EP-A1- 1 528 213      EP-A1- 3 299 563**
**WO-A1-2016/050839**

## Description

### TECHNICAL FIELD

The present invention is in the field of windows in the broad sense of the term, including openable windows such as casement windows, tilting windows, and glass doors in general as well as non-openable windows. The windows comprise a sash coupled to a fixed frame mounted in an opening or tunnel of a wall or similar. The present invention concerns more particularly high energy-performant windows comprising a stiffened frameless sash defined by an inner surface bounded by an inner glazing perimeter and by an outer surface bounded by an outer glazing perimeter, wherein the inner surface and the outer surface are made of an inner glazing and an outer glazing, the inner and outer glazing comprising no outer frame profile. The present invention proposes a novel concept of frameless sash windows having higher mechanical resistance than hitherto achieved, while maintaining a large transparent see-through area. This allows frameless sashes of larger dimensions to meet the requirements for air-, water/wind load resistance (e.g., EN16612, EN14351 -1). The present invention also simplifies production of the stiffened frameless sash with a cost-effective production process. Stiffened frameless sashes facilitate maintenance and cleaning of the windows, increase the opening ratio, and offer new design opportunities with new aesthetic aspects available to the designers.

### BACKGROUND OF THE INVENTION

Windows are typically composed by a sash coupled to a fixed frame mounted in an opening or tunnel of a wall or similar. The sash comprises one, two, or more glazings coupled to an outer frame formed by outer frame profiles and extending over a part or a whole of a glazing perimeter. The term "outer frame profile" refers herein to the frame profiles which are fixed to the inner glazing surface of an inner glazing facing an inner environment of the window and/or to the outer glazing surface of an outer glazing facing an outer environment of the window. The outer frame profiles are typically made of wood, metal, polymer, or composite material. Besides holding the glazings and allowing an easy opening/closing of the window, the outer frame profile confers to the sash the stiffness and mechanical resistance to resist loads generated for example by strong winds and rains as well as to ensure water- and air-tightness of the window. To meet these requirements, outer frame profiles generally have a larger thickness than the glazing itself, protruding out of the plane of the glazing in both sides of the sash. A glazing can consist of a single glass pane or of multiple glass panes.

Instead of an outer frame profile, a sash can comprise an inner frame profile. The term "inner frame profile" by contrast with an outer frame profile defined supra, is herein understood to mean the frame profiles which are encased between at least two glazings so as not to extend beyond the largest of the glazings perimeters. The outer frame profiles are always visible at least from one of the inner or outer environment of the window.

Typically, sashes comprising one or more glazings with no outer frame profile are designated as "frameless sashes." Frameless sashes have been available on the market for several years and are generally characterized by larger transparent see-through areas than corresponding sashes of same dimensions provided with an outer frame. Frameless sashes comprise an inner glazing defining the whole of the inner surface of the sash, and an outer glazing defining the whole of the outer surface of the sash, the inner and outer surfaces being bounded by inner and outer glazing perimeters. The inner and outer glazings are maintained separated and parallel to one another by at least one gap defined within a peripheral spacer and comprise no outer frame profile. Examples of frameless sashes are described e.g., in EP3228795 and EP2436865.

A frameless sash is coupled to a fixed frame, itself being sealingly coupled to a perimeter of a tunnel defined by an opening in a wall, with an inner face of the fixed frame facing an inner environment and an outer face of the fixed frame facing an outer environment, such that the inner environment is separated from the outer environment by the wall and the window when the frameless sash is in a closed position.

The fixed frame can typically be formed by fixed frame profiles made of aluminium, wood, polymer, or a composite material. Aluminium has the advantage of being extremely weathering resistant, unlike wood and polymers in general, which are sensitive to UV. Because of the high thermal conductivity of aluminium and although aluminium fixed frames are provided with a thermal barrier generally consisting of a polymer bloc, typically a thermoplastic bloc such as a polyamide bloc sandwiched between two aluminium elements to reduce the thermal conductivity across a thickness of the fixed frame, aluminium fixed frames yield the worst heat transfer coefficients, Uf, of all materials currently used as fixed frames. It follows that aluminium fixed frames are not an optimal choice for highly energy-performant windows.

Typically, the inner frame profile of a frameless sash is not visible from either side of the frameless sash in a closed position and is encased between the inner and outer glazings and within the peripheral spacer(s) and the inner and outer glazing perimeters. Unlike outer frames, inner frames are therefore necessarily thinner than the distance separating the inner glazing from the outer glazing, resulting in frameless sashes generally having lower mechanical properties than "traditional" sashes comprising an outer frame. This is a particularly sensitive problem for frameless sashes of large dimensions, e.g., having a dimension larger than 1500 mm, or larger than 2000 mm, which may have insufficient mechanical properties.

An inner frame is typically formed by inner frame profiles which ends are coupled to one another to form the inner frame profile. As mentioned, the inner frame dimensions in a direction normal to the outer glazing surface is restricted by the distance separating the inner glazing from the outer glazing. Besides the mechanical function discussed supra, the inner frame profile must also accommodate the hardware (34, 34s) required for locking the frameless sash in a closed or a semi-open position (e.g., tilting). For casement windows, the hinges allowing opening and closing of the window by rotation of the sash relative to the fixed frame can also be enclosed within the inner frame profile so as not to be visible from either side of the window.

DE1 9509206 described a double-glazing frameless sash comprising an inner profile extending across substantially the whole breadth separating inner from outer glazings. The inner frame profile comprises extensions covering the edges of both inner and outer glazings, for protecting them from fracture. The inner frame profile is fixed to the sash by a sealing resin and glue ("Versiegelingsmittel" and "Klebemasse").

WO2018054655, WO2016050839 and EP3299563 describes double- and triple-glazing frameless sashes comprising a reinforcing element which is plain and totally embedded between the inner and outer glazings and fixed to the glazings by an adhesive.

EP1528213 describes frameless double- and triple-glazing sashes comprising an inner profile consisting of a first profile and a second profile. In triple glazing sashes, the edges of the intermediate glazing rest on the first profile, which is in contact with the second profile made of aluminium and extending over the whole breadth separating the inner and outer glazings. The edges of the intermediate glazing must be machined or polished in order to reduce breaking of the glass and to yield a reproducible alignment of the first profile resting on said edges. The tolerances and quality required for the edges of the intermediate glazing to rest on the first profile are thus quite severe and increase the complexity and cost of manufacturing. Furthermore, the second profile, made of aluminium and extending from the inner to the outer glazing forms a thermal bridge unacceptable for today's standards of insulation. To solve the latter problem, EP1 528213 proposes to split the second profile into two elements separated by a thermal barrier made of an insulating material, but this is detrimental to the mechanical stiffening provided by the inner frame and complexifies the manufacturing of the second profile, which requires assembling of many parts.

The present invention proposes a highly energy-performant window comprising a stiffened frameless sash coupled to a fixed frame, wherein the stiffened frameless sash comprises an inner frame composed of first and second peripheral profiles conferring high stiffness and resistance to rain or wind loads, which is easy to produce and has high thermal insulating properties. The present invention therefore opens the door to new aesthetic concepts in the building industry with the use of frameless sashes has hitherto applied. These and other advantages are described in more details in the following sections.

## SUMMARY OF THE INVENTION

The present invention is defined in the appended independent claims. Preferred embodiments are defined in the dependent claims. In particular, the present invention concerns a stiffened frameless sash comprising,

(a) an outer glazing defining an outer glazing surface having an outer glazing area and bounded by an outer glazing perimeter,

(b) an inner glazing defining an inner glazing surface having an inner glazing area larger than or equal to the outer glazing area, and bounded by an inner glazing perimeter, the inner glazing being separated from the outer glazing by an inner width, W10g,

(c) an intermediate glazing parallel to both inner and outer glazings and bounded by an intermediate glazing perimeter, the intermediate glazing being positioned between the inner and outer glazings, separated from the outer glazing by an outer gap and from the inner glazing by an inner gap,

(d) an outer peripheral spacer separating the outer glazing from the intermediate glazing and comprising an outer gap side defining an outer gap perimeter of the outer gap, and comprising a peripheral side opposite the outer gap side,

(e) an inner peripheral spacer separating the inner glazing from the intermediate glazing and comprising an inner gap side defining an inner gap perimeter of the inner gap, and comprising a peripheral side opposite the inner gap side,

(f) a peripheral volume extending along the whole of the inner and outer glazing perimeters, and comprised between the inner and outer glazings and from the peripheral sides of the inner and outer peripheral spacers to the corresponding inner and outer glazing perimeters,

**wherein,** the stiffened frameless sash further comprises,

- a first peripheral profile fixed to or integral with the peripheral side of one only of the inner peripheral spacer or of the outer peripheral spacer, the first peripheral profile protruding into the peripheral volume and defining a support surface facing outwards, said support surface being transverse, preferably normal to the outer glazing surface and extends along a whole length of the corresponding inner or outer peripheral spacer, and **wherein,**

- a portion of the peripheral volume excluding the first peripheral profile is filled with a structural resin defining a resin surface, with a whole of the support surface of the first peripheral profile remaining exposed and is free of structural resin or is covered by a thin layer of the structural resin having a mean thickness of not more than 2 mm, preferably not more than 1 mm.

In order to stiffen the frameless sash of the present invention, it preferably further comprises a second peripheral profile extending over a whole perimeter of the stiffened frameless sash and in contact with the whole of the support surface (or in contact with the thin layer of the structural resin covering the support surface). The second peripheral profile comprises,

- a stiffening beam portion comprising an outer peripheral surface facing outwards, and a coupling surface fixed to the support surface of the first peripheral profile, preferably with screws or an adhesive, the coupling surface extending over at least 55% of the inner width, W10g, preferably at least 67% of W10g, more preferably at least 75% of W10g, and preferably not more than 90% of W10g, and
- a first and second walls, both protruding outwards from the outer peripheral surface, and substantially parallel to the outer glazing surface, the first and second walls defining a trough there between facing outwards, the second wall being positioned adjacent to the inner glazing.

In a projection onto a plane normal to the outer glazing surface, the second peripheral profile preferably covers at least 90% of an inner gap width G2 of the inner gap and at least 25% of an outer gap width G1 of the outer gap, preferably at least 50% of the outer gap width of the outer gap, wherein the inner and outer gap widths are measured normal to the outer glazing surface.

In a preferred embodiment, the first peripheral profile and/or the second peripheral profile are made of extruded or pultruded fibre reinforced polymer composites, preferably glass fibre reinforced. The second peripheral profile is preferably made of a material having a flexural modulus, G, of at least 5 GPa, preferably at least 15 GPa and more preferably at least 30 GPa or at least 50 GPa, wherein the flexural modulus is measured on a three-point bending mode according to ASTM D790-07.

For completing the stiffened frameless sash and making it ready to be mounted on a fixed frame, sash hardware can be, fitted in the trough. The sash hardware can be fixed to the trough with screws or rivets extending through the second peripheral profile and through a portion of the first peripheral profile. This way, the fixing of the hardware to the frameless sash can at the same time fix the second peripheral profile to the frameless sash through the first peripheral profile. Loads applied onto the outer glazing surface can thus be transferred to the second peripheral profile.

In order to hide the hardware from view when the frameless sash is in a closed position, the inner glazing and the outer glazing can comprise an inner peripheral region having a visible light transmission, TL, at least 50% lower than the inner glazing and the outer glazing, outside of the respective inner and outer peripheral reqions, and is preferably opaque. The inner and outer peripheral regions extend inwardly from an edge of the inner and outer glazings, along the whole of the inner and outer glazing perimeters, respectively, to preferably at least the inner and outer peripheral spacers contacting the corresponding glazing.

In a preferred embodiment, at least one glazing Is provided with a heat ray reflection film and/or a low-emissivity film. Alternatively, or concomitantly, at least one glazing forms an interactive glazing and is preferably provided with an electrochromic device, a thermochromic device, a photochromic device, a photovoltaic device, a multimedia connection, an antenna, communication means, a TV set, a light source including a LED, a loudspeaker, a sensor including an irradiance-, temperature-, or acoustic- sensor, or a combination thereof.

The present invention also concerns a window comprising,

(a) At least one stiffened frameless sash as defined supra, wherein the inner glazing surface is separated from the outer glazing surface by a sash thickness, W10,

(b) A fixed frame defining a frame opening having an outer face bounded by an outer frame perimeter mating the outer glazing perimeter and an inner face bounded by an inner frame perimeter mating the inner glazing perimeter, said fixed frame having a frame thickness, W20, measured normal to the outer surface when the stiffened frameless sash is in the closed position and comprising,

- A fixed frame profile having an inner side and an outer side, and having a frame profile thickness, W21, measured normal to the outer surface when the stiffened frameless sash is in a closed position, wherein $W21 \leq W20$,
- receiving elements for interacting with the sash hardware to couple the stiffened frameless sash to the fixed frame in a closed position, closing the frame opening, wherein the inner and outer glazing perimeters of the stiffened frameless sash are coupled to the inner and outer frame perimeters of the fixed frame, respectively,

(c) Sealing elements mounted on the fixed frame and/or on the frameless sash to form a seal between the fixed frame and the stiffened frameless sash when the latter is in the closed position, for sealingly closing the opening when the stiffened frameless sash is in the closed position.

In one embodiment, the window of the present invention also comprises a cover plate coupled to and covering at least 10% of a surface area of the outer side of the fixed frame profile over substantially a whole of the outer frame perimeter. The cover plate protects the fixed frame profile from weathering upon exposure to an outer environment. The cover plate preferably has a thickness, W22, measured normal to the outer surface when the stiffened frameless sash is in the closed position of not more than 15 mm, more preferably not more than 10 mm and most preferably not more than 7 mm. The thickness ratio, W22 / W20, of the cover plate to the fixed frame (20) is preferably not more than 20%, more preferably not more than 10%. The fixed frame thickness, W20, is preferably substantially equal to the sum of the thicknesses, W21 and W22, of the fixed frame profile and of the cover plate, i.e., $W20 \simeq W21 + W22$.

In a preferred embodiment, the thickness, W20, of the fixed frame is equal to the sash thickness, W10, of the stiffened frameless sash, within a tolerance of $\pm$ 5%, preferably of $\pm$ 2%, and when the stiffened frameless sash is in the closed position, the inner face of the fixed frame is substantially flush with the inner surface of the inner glazing, and the outer face of the fixed frame is substantially flush with the outer surface of the outer glazing.

The receiving elements of the fixed frame can be suitable for coupling the stiffened frameless sash to the fixed frame in one of the following manners,

- The stiffened frameless sash is fixedly coupled to the fixed frame in the closed position, or
- The stiffened frameless sash is movingly coupled to the fixed frame such that the sash can reversibly move with respect to the fixed frame from the closed position to an open position wherein the stiffened frameless sash leaves open at least a portion of the frame opening, by rotation of the frameless sash about hinges fixed to the fixed frame and defining at least a rotating axis parallel to the outer surface when the stiffened frameless sash is in the closed position.

This configuration comprises single sash window, stulp window, and tilt-and-rotate windows.

Stulp windows are casement windows that do not comprise central mullion(s) (i.e., a central pillar forming part of the fixed frame) and comprise at least two sashes. In a particular embodiment, the window of the present invention is a stulp window comprising two sashes without any central mullion and each comprising a middle edge facing each other when the sashes are in the closed position. So, in continuation, a middle edge of a first stiffened frameless sash is defined as an edge which faces a corresponding middle edge of a second stiffened frameless sash in the closed position. The edges of the first and second stiffened frameless sashes which are in contact are therefore both referred herein to as middle edges.

In this embodiment, the window is a casement window comprising

- A first sash which is a stiffened frameless sash as discussed supra,
- A second sash which is a stiffened frameless sash as discussed supra,

and which is devoid of mullion between the first and second sashes, wherein

- The first sash is movingly coupled to the fixed frame such that the first sash can reversibly move with respect to the fixed frame from the closed position, wherein the first and second sashes close in combination the frame opening, to an open position wherein the first sash leaves open a first portion of the frame opening by rotation of the first sash about hinges fixed to the fixed frame and defining at least a first rotating axis parallel to the outer surface of the first sashes when the first sash is in the closed position, and wherein
- The second sash comprises a third profile coupled to the whole length of a middle edge of the second sash, said profile is parallel to the first rotating axis of rotation and, in the closed position, sealingly contacts a corresponding middle edge of the first sash, which is parallel to the first rotating axis; the third profile is fixed to the stiffening beam portion of the second profile of the second sash and gives to the middle edge of the second sash a geometry which is complementary to a geometry of the middle edge of the first sash; the third profile preferably supports a sealing element which sealingly contacts the first wall of the second peripheral profile of the middle edge of the first sash, when the first and second sashes are in the closed position.

In a first variant of this embodiment, the second sash is fixedly coupled to the fixed frame in the closed position. In a second, alternative variant, the second sash is movingly coupled to the fixed frame such that the second sash can reversibly move with respect to the fixed frame from the closed position, wherein the first and second sashes close in combination the frame opening, to an open position wherein the second sash leaves open a second portion of the frame opening by rotation of the second sash about hinges fixed to the fixed frame and defining at least a second rotating axis parallel to the at least first rotating axis.

The window can comprise a mechanically, pneumatically or electrically actuating device for reversibly moving the stiffened frameless sash with respect to the fixed frame from the closed position to the open position and reverse.

The present invention also concerns an assembly comprising,

- A wall of thickness, W30, separating an inner environment from an outer environment and provided with a through opening in the form of a tunnel defined by a tunnel perimeter, and
- At least a window as defined supra, wherein the fixed frame is sealingly coupled to the tunnel perimeter, with the inner face of the fixed frame facing the inner environment and the outer face facing the outer environment, such that the inner environment is separated from the outer environment by the window when the at least one stiffened frameless sash is in the closed position; the inner face of the fixed frame is preferably flush with the wall at the inner environment and/or the outer face of the fixed frame is preferably flush with the wall at the outer environment.

The present invention also concerns a method for producing a stiffened frameless sash as defined supra, comprising the following steps:

(a) Forming a three-glazing unit by stacking an outer glazing, an outer peripheral spacer, an intermediate glazing, an inner peripheral spacer, and an inner glazing the inner glazing being separated from the outer glazing by an inner width, W1 0g, such as,

- to form an outer gap and an inner gap between the intermediate glazing and the outer and inner glazings, respectively, and enclosed within the inner and outer peripheral spacers, respectively, and
- to define a peripheral volume extending along the whole of the inner and outer glazing perimeters, and comprised between the inner and outer glazings and from the peripheral sides of the inner and outer peripheral spacers to the corresponding inner and outer glazing perimeters, wherein a first peripheral profile is coupled to or is integral with one only of the inner peripheral spacer or of the outer peripheral spacer, the first peripheral profile protruding into the peripheral volume and defining a support surface facing outwards, which is transverse, preferably normal to the outer glazing surface (10a) and extends along a whole length of the corresponding inner or outer peripheral spacer

(b) Filling a portion of the peripheral volume excluding the first peripheral profile with a structural resin defining a resin surface, with a whole of the support surface of the first peripheral profile remaining exposed and free of structural resin or is covered by a thin layer of the structural resin having a mean thickness of not more than 2 mm, preferably not more than 1 mm.

The foregoing frameless sash can be stiffened by carrying out the following additional steps of,

(a) coupling a second peripheral profile to the support surface or thin layer of the structural resin, preferably with screws or an additive, wherein the second peripheral profile extends over a whole perimeter of the stiffened frameless sash and comprises,

- a stiffening beam portion comprising an outer peripheral surface facing outwards, and a coupling surface coupled to the support surface of the first peripheral profile, the coupling surface preferably extending over at least 55% of the inner width, W10g, preferably at least 67% of W10g, more preferably at least 75% of W10g, and
- a first and second walls, both protruding outwards from the outer peripheral surface, and substantially parallel to the outer glazing surface, the first and second walls defining a trough there between facing outwards, the second wall being positioned adjacent to the inner glazing, and

(b) fitting sash hardware into the trough.

## BRIEF DESCRIPTION OF THE FIGURES

For a fuller understanding of the nature of the present invention, reference is made to the following detailed description taken in conjunction with the accompanying drawings in which:

**Figure 1:** shows an example of production steps of a stiffened frameless sash according to the present invention.

**Figure 2:** shows cross-sectional views of various embodiments of an edge of a stiffened frameless sash according to the present invention.

**Figure 3:** shows a perspective view of an embodiment of a stiffened frameless sash and fixed frame according to the present invention.

**Figure 4:** shows cross-sectional views of the embodiment of stiffened frameless sash and fixed frame of Figure 3: (a) in a closed position, (b) in an open position, and (c) mounted in the tunnel in a wall; and (d) cutting plane 4-4 of Figures 4(a) to 4(c).

**Figure 5:** shows a perspective view of an alternative embodiment of a stiffened frameless sash and fixed frame according to the present invention.

**Figure 6:** shows cross-sectional views of the alternative embodiment of stiffened frameless sash and fixed frame of Figure 5: (a) in a closed position, (b) in an open position, and (c) mounted in the tunnel in a wall; and (d) cutting plane 6-6 of Figures 6(a) to 6(c).

**Figure 7:** shows various types of windows according to the present invention (a) casement window with two stiffened frameless sashes opening by rotation (= stulp windows) (b) casement window with one stiffened frameless sash opening by rotation about a vertical axis, and (c) tilting window opening by rotation about a horizontal axis.

**Figure 8:** shows cross-sectional views of an embodiment of a casement window comprising first and second sashes, (a) cut along the plane 8-8 of the middle edge in a closed position, (b) the same as (a) but in an open position, (c)&(d) similar cut views as in (b), with different sealing elements arrangements, (e) cut along plane 8-8 of the full window including walls surrounding the tunnel, (f) cutting plane 8-8 of Figures 8(a) to 8(e), and (g)&(h) perspective view of an angle of a second sash and portion of a fixed frame.

## DETAILED DESCRIPTION OF THE INVENTION

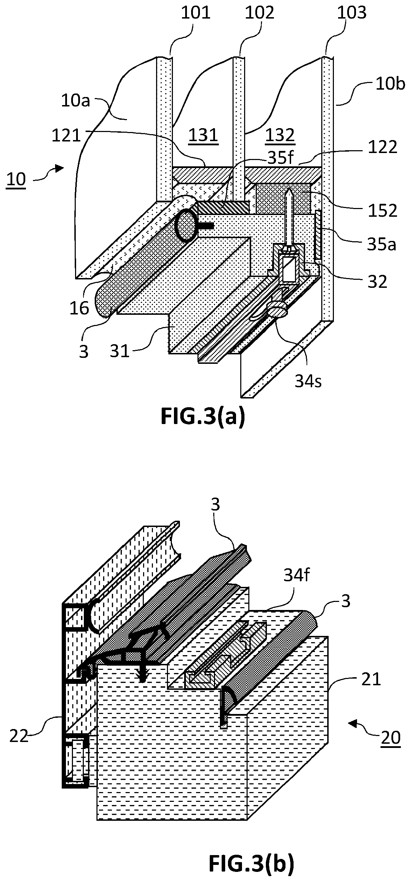

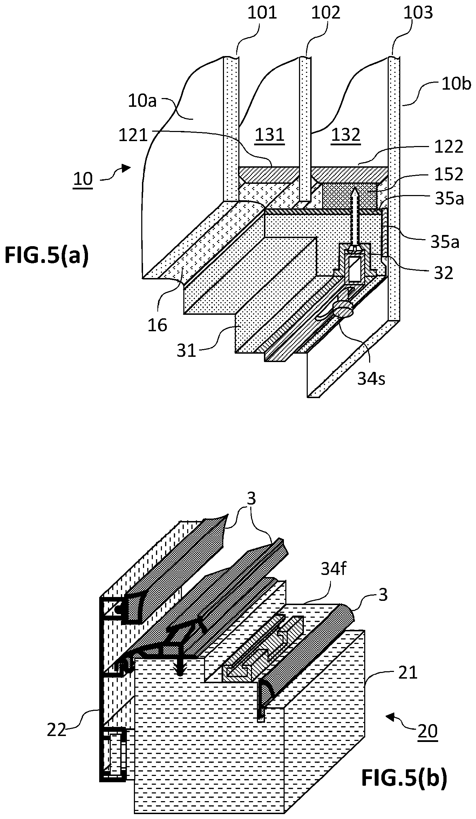

As illustrated in Figures 3 and 5, the present invention concerns a window comprising a stiffened frameless sash (10) coupled to a fixed frame (20). The frameless sash is reinforced by a novel inner frame concept, to increase the mechanical properties of frameless sashes close to, possibly up to the level of sashes provided with an outer frame.

**Stiffened Frameless Sash**

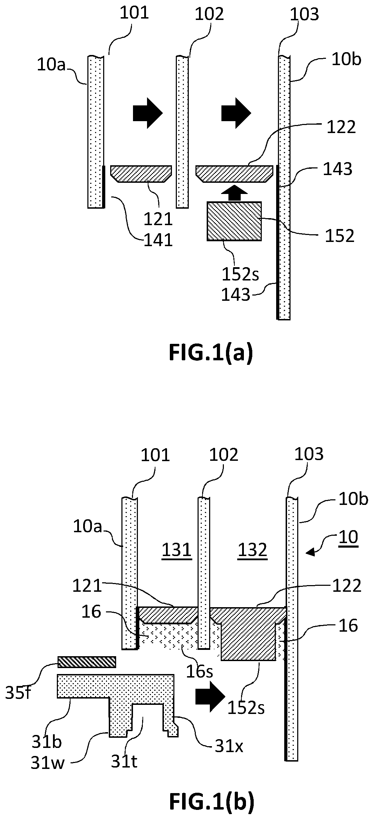

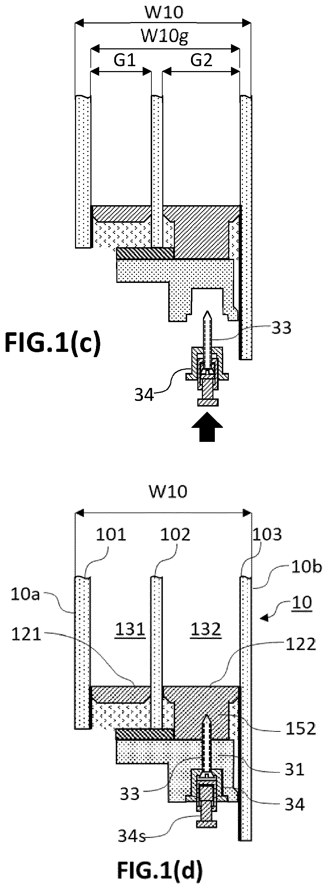

The stiffened frameless sash comprises an inner glazing (103) defining an inner surface (10b) bounded by an inner glazing perimeter, parallel to an outer surface (10a) of an outer glazing (101), bounded by an outer glazing perimeter. As illustrated in Figure 1, the inner and outer glazings are separated from one another by an inner width, W10g. An intermediate glazing (102) is positioned between and parallel to the inner and outer glazings and is bounded by an intermediate glazing perimeter. The intermediate glazing is separated from the outer glazing (101) by an outer gap (131) and from the inner glazing (103) by an inner gap (132).
A stiffened frameless sash generally has four edges defining a rectangle. Likely, each of the inner, intermediate, and outer glazing has four edges defining the inner, intermediate, and outer glazing perimeters, respectively.
The stiffened frameless sash according to the invention has an inner glazing defining an inner glazing surface having an inner glazing area larger than or equal to the outer glazing area. The stiffened frameless sash of the invention has also an inner glazing area larger or equal to the intermediate glazing area.
It is preferred that at least one or two edges of the outer (101) and intermediate glazings (102) be flush, i.e., aligned on a plane normal to the outer glazing surface. This configuration facilitates the positioning of the outer and intermediate glazings during manufacturing of the triple-glazing unit. More preferably at least three edges are aligned. This configuration facilitates the insertion of a prefabricated frame made of four segments of second peripheral profiles fixed two by two. Additionally to or independently of the alignment of one or more edges of the outer and intermediate glazings as discussed supra, for forming a sealed contact between a stiffened frameless sash and a corresponding fixed frame and thus forming an air- and water-tight window, it is preferred that at least three edges of the inner glazing (103) be stepped outwardly with respect to both intermediate glazing (102) and outer glazing (101). In other words, on a projection on a plane parallel to the outer glazing surface, the inner glazing perimeter of the inner glazing encloses at least three edges of both outer and intermediate glazing perimeters.

An edge of a stiffened frameless sash is defined as the surface connecting the inner surface (10b) to the outer surface (10a) over a continuous portion, preferably over a straight portion of the inner and outer glazing perimeters. A continuous portion of a perimeter is defined herein as a portion between two corners or kinks of the perimeter; in other words, a portion of the perimeter comprised two sequential points at which the perimeter portion has two different tangents on either side (i.e., non-derivable points). The slope formed by a planar surface (= straight line in a transverse cut) extending between the inner glazing perimeter and the recessed outer glazing perimeter is preferably comprised between 30° and 60° and is preferably equal to $45° \pm 5°$ for optimizing the sealing contact between the stiffened frameless sash and fixed frame.

In the case of a stiffened frameless sash intended to be used in a window comprising a single sash or intended to be used as a first sash of a window according to the invention comprising a first and a second sash, it is most preferred that the four edges of the outer and intermediate glazings are aligned. This configuration allows reducing the costs of manufacturing, as this configuration corresponds to a conventional process for producing a double-glazing unit (cf. Figures 1, 2(a), and 3 to 6). In this case, it is also more preferred that all four edges of the inner glazing (103) be stepped outwardly with respect to both intermediate glazing (102) and outer glazing (101). In other words, on a projection on a plane parallel to the outer glazing surface, the inner glazing perimeter of the inner glazing encloses the four edges of both outer and intermediate glazing perimeters.

The gaps (131, 132) can also be referred to as an interspace or a cavity. Typically, the peripheral spacers are a warm-edge spacer to improve the thermal insulation especially when the sash has no outer frame profile. They usually comprise a desiccant and have typically a thickness equal to or greater than 6 mm.

In order to increase the transparent see-through area, it might be advantageous that the inner (122) and outer (121) peripheral spacers along at least one of the stiffened frameless sash edges are made of a transparent material. The term "transparent" denotes a property illustrating the percentage TL (light transmission) of visible light transmitted through a material in the visible spectrum of at least 1%. Preferably, transparent relates to a TL property of at least 10%. Ideally, transparent denotes a TL of at least 50%. The transparent material of the peripheral spacers may be glass, pre-stressed glass or a transparent organic material such as poly(methyl methacrylate), polycarbonate and the like. In this case, the peripheral spacers are attached to the glazing surfaces by transparent adhesives or seals placed between each of the glazings and the spacers.

In general, the gaps are filled with a gas which can be selected from the group consisting of air, dry air, argon (Ar), krypton (Kr), xenon (Xe), sulfur hexafluoride (SF6), carbon dioxide or a combination thereof. Said predetermined gas are effective for preventing heat transfer and/or may be used to reduce sound transmission.

The outer glazing is separated from the intermediate glazing by an outer peripheral spacer (121) comprising an outer gap side facing towards the centre of the stiffened frameless sash and defining an outer gap perimeter of the outer gap and comprising a peripheral side opposite the outer gap side (i.e., facing away from the centre of the frameless sash). Similarly, the inner glazing is separated from the intermediate glazing by an inner peripheral spacer (122) comprising an inner gap side facing towards the centre of the stiffened frameless sash and defining an inner gap perimeter of the inner gap, and comprising a peripheral side opposite the inner gap side (i.e., facing away from the centre of the frameless sash). Inner and outer peripheral spacers are typically attached to the glazing surfaces by a seal made of a butyl material (not represented in the Figures). Depending on the spacer design, the butyl has to be added to the spacer upon application thereof between two glazings. Alternatively, butyl precoated peripheral spacers are available on the market. It is preferred that the inner peripheral spacer (122) have a width G2 measured normal to the outer glazing surface comprised between 6 and 40 mm, preferably between 18 and 34 mm and more preferably between 24 and 30mm. The outer peripheral spacer (121) can have a width G1 which is smaller than, larger than, or equal to the width G2 of the inner spacer, and yet preferably comprised within the same ranges. It is preferred that the outer peripheral spacer (121) have a width G1 smaller than or equal to the width G2 of the inner peripheral spacer (122). These dimensions of the inner spacer allow the fitting of first and second peripheral profiles and of the hardware, while achieving high mechanical performances of the stiffened frameless sash. These dimensions are compatible with a preferred window configuration comprising at least one frameless sash coupled to a fixed frame, with both inner and outer glazing surfaces being flush with the fixed frame. They are also compatible with a preferred assembly embodiment comprising a window fixed to a tunnel of a wall, with both inner and outer glazing surfaces being flush with both surfaces of the wall, respectively. The foregoing preferred embodiments are described more in detail below.

The stiffened frameless sash comprises a peripheral volume extending along the whole of the inner and outer glazing perimeters and comprised between the inner and outer glazings and from the peripheral sides of the inner and outer peripheral spacers to the corresponding inner and outer glazing perimeters. The stiffened frameless sash comprises a novel concept of inner frame formed from the first and second peripheral profiles (151,152, 31), which is enclosed within the peripheral volume and described more in detail in continuation. The inner frame is not visible or at least has a limited visibility from an inner environment when the stiffened frameless sash is in a closed position, and it extends over a whole perimeter of the stiffened frameless sash. The inner frame has a reinforcing function (stiffening and increasing the flexural strength of the frameless sash), as well as a function of supporting the hardware, including hinges, a mechanism (34s) of locking / unlocking the stiffened frameless sash in a closed position with respect to the fixed frame mounted on the tunnel of a wall.

The stiffened frameless sash of the present invention has a sash thickness, W10, measured normal to the outer surface and extending between the outer glazing surface (10a) of the outer glazing and the inner glazing surface (10b) of the inner glazing, both outer and inner glazing surfaces (10a, 10b) facing away from the centre of the stiffened frameless sash. A stiffened frameless sash is characterized by smooth inner and outer surfaces over their whole surface areas.

With the development of new building materials for the walls of buildings, the current trends in the building industry is to reduce the thickness of the walls while maintaining high thermal energy performances of the overall windows and walls. Ten years ago, an average outer wall thickness was about 200 mm, when it dropped nowadays to about 150 mm. This has *inter alia* the advantage for a building occupying a given outer area on the ground, of increasing the inner floor area defined within the walls of the building, resulting in larger rooms. In a preferred embodiment of the present invention and for following the trend of buildings with thinner walls, the sash thickness, W10, of the stiffened frameless sash is preferably not more than 85 mm, preferably not more than 75 mm and more preferably not more than 70 mm. The novel inner frame made of first and second peripheral profiles according to the present invention provides stiffened frameless sashes having high flexural properties (high flexural modulus and strength) even at as low thicknesses (measured normal to the outer glazing surface) as required by today's trends of thinner outer walls thicknesses.

As shown in Figures 1 to 6, the stiffened frameless sash comprises an intermediate glazing (102) forming a three glazing unit formed by an outer- (101), intermediate- (102), and inner-glazing (103) separated from one another by two gaps (131, 132), each gap being defined within an inner and outer peripheral spacer (121, 122). In an alternative embodiment (not illustrated), the glazing can comprise two intermediate glazings forming a four glazing unit formed by an outer- (101), first intermediate- (102), second intermediate-, and inner-glazing (103) separated from one another by three gaps, each one defined within a peripheral spacer. A three-glazing frameless sash is herein preferred as it yields a more advantageous ratio of high energy performances to lower weight and lower manufacturing complexity and cost, than a four-glazing frameless sash.

In order to hide the inner frame and most of the hardware enclosed within the peripheral volume from sight from both inner and outer environments separated by the window, the inner glazing (103) and the outer glazing (101) preferably comprise a inner peripheral region (143) and an outer peripheral region (141) extending inwardly over a height defined from an edge of the inner and outer glazings, along the whole of the inner and outer glazing perimeters, respectively, to preferably at least the inner gap side and outer gap side of the peripheral spacers (121, 122) contacting the corresponding glazing. The inner and outer peripheral regions have a visible light transmission, TL, at least 50% lower than the inner glazing (103) and the outer glazing (101), respectively, outside of the respective inner and outer peripheral regions, and is preferably opaque. For example, the peripheral region can be enamelled, etched, sand-blasted, or a combination thereof to create a texture yielding a translucent peripheral region. The peripheral region can also be made (partially) opaque or translucent by applying a (decorative) film either on one or both of the glazing surfaces of one of the inner and outer glazing or in case one of the inner and outer glazing is a laminated glazing, a film can be applied to one of the layers of the laminated glazing. The peripheral region can also comprise decorative patterns. To increase the transparent see-through area of the stiffened frameless sash (i.e., the see-through area of the window when the stiffened frameless sash is in the closed position), the height of the peripheral region, measured from an edge toward the centre of a glazing is preferably comprised between 10 and 100 mm, more preferably between 15 and 80 mm, most preferably, between 20 and 60 mm.

For safety aspects, the stiffened frameless sash of the invention can be equipped with retaining devices. By retaining devices it is understood means of retaining the glazings from falling to reduce danger in the event of bonding failure. The retaining devices retain the inner (103) and/or outer (101) glazings, preferably the inner (103) and outer (101) glazings. The inner (103) and/or outer (101) glazings are solidarized through the structural resin (16). In case of failure of this bonding, the retaining devices will ensure the integrity of the stiffened frameless sash and retain the inner and/or outer glazings from falling. The necessity for these accessories is to be evaluated depending on security specifications, the situation of the building and may be calculated according to its working condition.

**Glazing**

The glazings of the present invention can consist of a single glass pane or of multiple glass panes which can be chosen among float clear, extra-clear or coloured glass. In particular and for aesthetic purposes, the glazing can be a decorative glazing such as a painted or etched or sand-blasted glazing or a combination thereof. The term "glass" is herein understood to mean any type of glass or equivalent transparent material, such as a mineral glass or an organic glass. The mineral glasses used may be irrespectively one or more known types of glass such as soda-lime-silica, aluminosilicate or borosilicate, crystalline and polycrystalline glasses. The glass pane can be obtained by a floating process, a drawing process, a rolling process or any other process known for manufacturing a glass pane starting from a molten glass composition. The glass pane can optionally be edge-ground. Edge grinding renders sharp edges into smooth edges which are much safer for people handling such glass pane, in particular with the edges of frameless sash. Preferably, the glass pane according to the invention is made of soda-lime-silica glass, aluminosilicate glass or borosilicate glass. More preferably and for reasons of lower production costs, the glass pane is made of a soda-lime-silica glass.

To maintain the high mechanical performance and/or to further improve the safety of the stiffened frameless sash, at least one glazing preferably consists of a single pre-stressed glass pane. For example, the inner glazing (103) and/or the outer glazing (101) can be pre-stressed glass panes. A pre-stressed glass is a heat strengthened glass, a thermally toughened safety glass, or a chemically strengthened glass. Aluminosilicate-type glass compositions, such as for example those from the products range DragonTrail® from Asahi Glass Co. or those from the products range Gorilla® from Corning Inc., are also known to be suitable for chemical tempering.

Preferably, the composition for at least one of the glass panes of the stiffened frameless sash of the present invention comprises the following components in weight percentage, expressed with respect to the total weight of glass. Comp. A is an example of a first embodiment of glass composition, and Comp. B is an example of a soda-lime-silicate-type glass with a base glass matrix.

|  | Comp. A | Comp. B |
|---|---|---|
| $SiO_2$ | 40 - 78% | 60 - 78 wt% |
| $Al_2O_3$ | 0 - 18% | 0 - 8 wt%, pref 0 - 6 wt% |
| $B_2O_3$ | 0 - 18% | 0 - 4 wt%, pref 0 - 1 wt% |
| $Na_2O$ | 0 - 20% | 5 - 20 wt%, pref 10 - 20 wt% |
| CaO | 0 - 15% | 0 - 15 wt%, pref 5 - 15 wt% |
| MgO | 0 - 10% | 0 - 10 wt%, pref 0 - 8 wt% |
| $K_2O$ | 0 - 10% | 0 - 10 wt% |
| BaO | 0 - 5% | 0 - 5 wt%, pref 0 - 1 wt%. |

Other preferred glass compositions for at least one of the glass panes of the frameless sash of the present invention comprise the following components in weight percentage, expressed with respect to the total weight of glass:

|  | Comp. C | Comp. D | Comp. E |
|---|---|---|---|
| $SiO_2$ | 65 - 78 wt% | 60 - 78 wt% | 65 - 78 wt% |
| $Na_2O$ | 5 - 20 wt% | 5 - 20 wt% | 5 - 20 wt% |
| $K_2O$ | 0 - 5wt% | 0.9 - 12 wt % | 1 - 8 wt% |
| $Al_2O_3$ | 1 - 6, pref 3 -5 wt% | 4.9 - 8 wt% | 1 - 6wt% |
| CaO | 0 - 4.5 wt% | 0.4 - 2 wt% | 2 - 10 wt% |
| MgO | 4 - 12 wt% | 4 - 12 wt% | 0 - 8 wt% |
| MgO / (MgO + CaO) | $\geq 0.5$, pref. $\leq 0.88 < 1$. |  |  |
| $K_2O/(K_2O+Na_2O)$ |  |  | 0.1 - 0.7 |

Other examples of base glass matrices for glass pane compositions suitable for the present invention are described in WO2015/150207, WO2015/150403 WO2016/091672, WO2016/169823, and WO2018/001965.

In order to limit the overall weight and to adapt to the trend of building thinner walls observed in the building industry while ensuring high flexural properties (flexural modulus and strength), the thickness of a glazing of an openable stiffened frameless sash is preferably not more than 12 mm, preferably not more than 10 mm. The sum of thicknesses of all the glazings forming a stiffened frameless sash according to the present invention is preferably at most 24 mm and more preferably at most 22 mm.

In a preferred embodiment of the present invention, a glass pane can comprise one or more layers such as low emissivity layers, heat ray reflection layers (solar control layers), anti-reflective layers, anti-fog layers. The one or more layers can be coated or applied as one or more films. At least one glazing (101, 102, 103) preferably comprises a glass pane provided with a heat ray reflection layer and/or a low emissivity layer for improving the thermal insulating properties of the frameless sash. In a more preferred embodiment, the intermediate glazing (102) is provided with a low emissivity layer on one or both sides of the intermediate glazing.

Within the present invention and for improving the thermal insulating performance, as well as safety or acoustic performance, at least one of the glazings (101, 102, 103) of the stiffened frameless sash can consist of multiple glass panes. In particular, a multiple glass pane glazing can be selected among a vacuum insulating glazing (VIG), preferably placed as intermediate glazing (102), to yield particularly high insulating properties, or a laminated glazing to enhance safety and acoustic performances.

In a preferred embodiment at least one of the glazings (101, 102, 103) of the stiffened frameless sash can be an interactive glazing. The term "interactive glazing" is herein understood to mean a glazing integrating functional elements capable of responding to an external stimulation from the environment and/or from a user. For example, the interactive glazing can integrate functional elements including one or more of an electrochromic, thermochromic, or photochromic device, a photovoltaic device, a multimedia connection, an antenna, communication means, a TV set, a light source including a LED, a loudspeaker, a sensor including an irradiance-, temperature-, acoustic- sensor, and the like, or a combination thereof. The electrochromic device can be controlled manually, with a switch or a remote control, or it can be coupled to a sensor measuring the light irradiation and by a controller automatically controlling the voltage applied to the electrochromic device as a function of the level of irradiation. The photovoltaic device can be a photovoltaic laminated cell for feeding batteries positioned within or adjacent to the window.

The windows of the present invention are preferably highly energy-efficient. For this reason, it is preferred that the glazings of the stiffened frameless sash (i.e., the transparent see-through area of the frameless sash) have a thermal transmittance coefficient, Ug, of not more than 1.0 W / m$^2$ K, preferably of not more than 0.7 W / m$^2$ K, or even not more than 0.5 W / m$^2$ K.

### Inner Frame

The fist peripheral profile (151,152) and the second peripheral profile (31) form an inner frame (151,152, 31), which extends over a whole perimeter of the stiffened frameless sash. The inner frame is lodged within the peripheral volume. Because the inner frame does not extend beyond the inner and outer glazing perimeters, such sashes are called frameless sashes although they do comprise a frame, albeit an inner frame.

The gist of the present invention is a novel concept of inner frame, combining both easier production and higher mechanical (flexural) properties of a frameless sash than hitherto achieved. The inner frame comprises a first peripheral profile (151, 152) and a second peripheral profile (31) fixed or integral to the first peripheral profile. For ease of production, it is preferred that the first and second peripheral profiles be separate profiles mechanically and/or adhesively coupled to one another during production of the stiffened frameless sash (cf. Figures 1(b)&1(c)). Through the first peripheral profile, the inner frame composed of the first and second peripheral profiles is fixed or integral to one only of the inner peripheral spacer (122) or of the outer peripheral spacer (121), preferably to the inner peripheral spacer (122).

### First Peripheral Profile (151, 152)

The first peripheral profile (151, 152) is fixed to or integral with the peripheral side of one only of the inner peripheral spacer (122) or of the outer peripheral spacer (121) (preferably the inner peripheral spacer (122)). If the first profile is integral with the inner (or outer) peripheral spacer (cf. Figures 1(b)-1(d)), the positioning of the first profile is of course facilitated and more accurate and, at the same time, the mechanical coupling between first peripheral profile and the inner (or outer) peripheral spacer is optimal. On the other hand, a first peripheral profile which is separate from the inner (or outer) peripheral spacer (cf. Figure 1(a)) offers more flexibility to accommodate small irregularities within machining tolerances.

The first peripheral profile protrudes into the peripheral volume and defines a support surface (151s, 152s) facing outwards (i.e., away from the centre of the stiffened frameless sash). The support surface can be planar or not. For ease of production, it is preferably planar. The support surface is oriented transverse (i.e., non-parallel), preferably normal to the outer glazing surface (10a) and extends along a whole length of the corresponding inner or outer peripheral spacer (121 , 122).

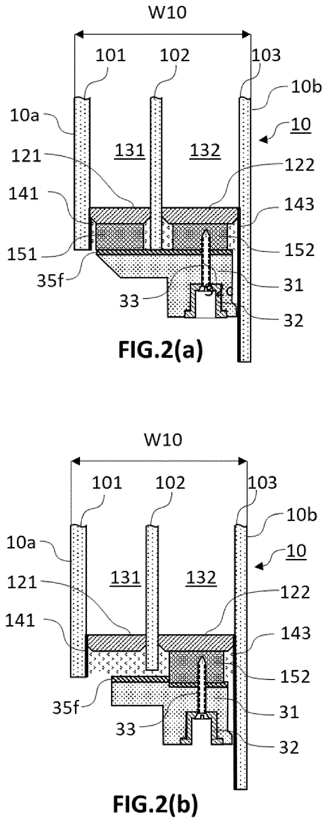

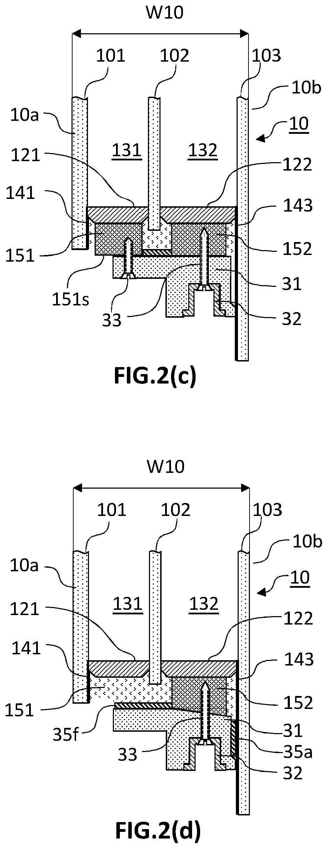

The first peripheral profile preferably has a prismatic geometry with more preferably a rectangular (cf. Figure 2(b)) or trapezoidal cross-section (cf. Figure 2(d)). A trapezoidal cross-section can be advantageous for self-centring a prefabricated inner frame component made by assembling second profiles (31) into a rectangle, as discussed below. The first peripheral profile can be bulk or hollow, depending on the material used, mechanical properties required, and means of fixing the second peripheral profile (31) to the first peripheral profile. It may be made of aluminium or stainless steel, since it does not extend beyond the intermediate glazing and does not constitute a significant thermal bridge over the whole thickness of the frameless sash. It is preferred, however, to use a material having higher thermal insulating properties, as the presence of a thermally conductive material over a fraction of the thickness of the stiffened frameless sash reduce the total thermal insulating performance. To reach the required mechanical properties, it is preferred that the first peripheral profile be made of a fibre reinforced composite with a polymeric matrix. The reinforcing fibres can be glass, aramid or carbon fibres. For a cost point of view, glass fibres are preferred, but if high mechanical properties are required, carbon fibres can be used instead. Similarly, for high toughness, aramid fibres can be used. A mixture of fibres can also be envisaged. The reinforcing fibres can be chopped fibres, and the first peripheral profile can be produced by extrusion of a chopped fibre filled polymer. For higher mechanical properties, it is, however, preferred to use continuous fibres. The first peripheral profile can then be produced continuously by pultrusion. The polymeric matrix can be a thermoset, such as an epoxy, polyester, polyurethane, and the like. Alternatively, it can be a thermoplastic, such as a polyolefin (e.g., PE, PP), a polyamide (e.g., PA6, PA66, PA12), a polyester (e.g., PET, PEN), polyurethane, or blends or mixtures thereof.

As illustrated in Figure 1(b), a portion of the peripheral volume excluding the first peripheral profile (151, 152) is filled with a structural resin (16) defining a resin surface (16s). By structural is meant the ability to bear and transfer loads related in particular to the weight of the glass sheets and to the thermal expansion stresses. For example, the structural resin can be a silicon resin, which generally combine high thermal insulating properties, ability to form air- / water-tight seals, and good mechanical properties. A whole of the support surface of the first peripheral profile remains exposed and free of structural resin, or is covered by a layer of the structural resin which is thin, preferably having a mean thickness of not more than 2 mm, more preferably of not more than 1 mm, wherein the mean thickness is determined as the average of the thicknesses of the layer measured over a segment of 100 mm length of the support surface, measured parallel to the outer glazing surface of the support surface of the first peripheral profile. It is preferred that the support surface of the first peripheral profile be free of any structural resin (16), but in practice it is difficult when applying the structural resin, not to coat parts of the support surface of the first peripheral profile too. This is not a major issue as long as the operator is aware of it, as the resin surface (16s) may not be as compatible as the support surface (151s, 152s) of the first peripheral profile with some pressure sensitive adhesives (PSA) used in double-sided adhesive tapes suitable for fixing the second peripheral profile. Appropriate adhesives should be selected, or mechanical fastening means should be used instead.

The structural resin forms a strong bond between the inner and outer glazings, and possibly the intermediate glazing, and also fixes the first peripheral profile. The edges of the intermediate glazing (102) can preferably be embedded in the structural resin (16) (cf. Figures 2(b) -2(d). This greatly facilitates handling of the triple glazing unit during manufacturing of the stiffened frameless sash, as the edges of the intermediate glazing are not exposed to any damages from accidental impacts. It also facilitates manufacturing because, on the one hand, the edges of the intermediate glazing need not be machined or polished accurately and, on the other hand, the actual position of the edges of the intermediate glazing does not affect the accuracy of positioning of the first and second peripheral profiles (31, 151, 152). This "freedom" in the positioning of the intermediate glazing is particularly advantageous when the intermediate glazing is a functional glazing (multiple glass pane glazing, vacuum insulating glazing (VIG), "interactive glazing" as discussed supra, and the like) as the thickness of the intermediate glazing may vary from one type to the other, and electrical connexion need be accommodated at the edges of the glazing.

The first peripheral profile is preferably fixed to (or integral with) the inner peripheral spacer. This is because, on the one hand, the hardware including locking / unlocking mechanism (34s) of the stiffened frameless sash to the fixed frame is positioned closer to the inner glazing. On the other hand, the hardware, fixed to the second peripheral profile, can be fixed (also) by means of screws or rivets penetrating through the trough (31t) of the second peripheral profile and through the first peripheral profile too.

For stiffened frameless sashes of large dimensions, or for applications requiring high frameless sash stiffnesses, a first peripheral profile (151, 152) can be coupled to each of the inner and outer peripheral spacers (121, 122), as illustrated in Figures 2(a) and 2(c). The second peripheral profile can thus be mechanically coupled to both inner and outer peripheral spacers via the two first peripheral profiles, enhancing the load transfer from the inner and outer glazings to the second peripheral profile which provide higher stiffness to the frameless sash.

**Second Peripheral Profile (31)**

The first peripheral profile (151, 152) does contribute to some stiffening of the frameless sash in the direction normal to the outer glazing surface, but to a level substantially lower than required in use, as specified, e.g., in EN16612. The main function of the first peripheral profile is to mechanically link the second peripheral profile (31) to the glazings and to the whole stiffened frameless sash. For this reason, the second peripheral profile is preferably made of a material having mechanical properties and preferably has a geometry characterized by a moment of inertia such that the second peripheral profile has a high bending stiffness in a direction normal to the outer glazing surface and, at the same time, good thermal insulating properties. Like the first peripheral profile, the second peripheral profile can be at least partially made of metal but is preferably made of a fibre reinforced composite with a polymeric matrix of the same type as discussed supra with respect to the first peripheral profile. In a preferred embodiment, the second peripheral profile is made of a pultruded continuous unidirectional glass fibre reinforced composite with a thermoset or thermoplastic matrix.

The second peripheral profile (31) extends over a whole perimeter of the stiffened frameless sash and contacts with the whole of the support surface (151s, 152s) of the first peripheral profile. As shown in Figure 1(b), the second peripheral profile comprises a stiffening beam portion (31b) and a first (31w) and second (31x) walls, protruding outwards from the outer peripheral surface.

The stiffening beam portion (31b) comprises an outer peripheral surface facing outwards (i.e., away from the centre of the stiffened frameless sash), and a coupling surface facing towards the centre of the stiffened frameless sash and fixed to the support surface of the first peripheral profile (151, 152). The coupling surface has a geometry mating the geometry of the support surface to form a substantially continuous coupling interface between them. The coupling surface of the second peripheral profile can be fixed to the support surface of the first peripheral profile with mechanical means (33), including e.g., screws, snap-fits or rivets, or with an adhesive means, such as an adhesive resin or a double-sided adhesive tape or foam (35f), or with a combination of mechanical and adhesive means. The coupling surface of the second peripheral profile has an area larger than the support surface of the first peripheral profile and covers substantially the whole of the support surface and extends over a portion of the area of the resin surface (16s) of the structural resin (16) filling a portion of the peripheral volume around the first peripheral profile. If desired, the coupling surface can be coupled to the portion of the area of the resin surface (16s) with an adhesive. For example, as shown in Figures 3(a) and 5(a), the foam layer can be a double-sided foam adhesive (35a). Alternatively, a foam layer (35f) devoid of any adhesive on one or both faces can be used instead, as shown in Figure 1(b). If two first profiles are provided as illustrated in Figures 2(a) and 2(c), the coupling surface of the second peripheral profile (31) can be fixed to the support surfaces of both first peripheral profiles (151, 152) with adhesive means and/or mechanical means (33), as shown in Figure 2(c).

To enhance the stiffening function of the second peripheral profile, the coupling surface can extend over a beam width of at least 55% of the inner width W10g (= distance separating the inner glazing from the outer glazing), preferably at least 67% of W10g, more preferably at least 75% of W10g. To avoid forming a thermal bridge between the inner and outer glazings, it is preferred that the stiffening beam portion (31b) and the coupling surface thereof do not extend over more than 90% of W10g. In a projection onto a plane normal to the outer glazing surface (10a), the second peripheral profile (31) preferably covers at least 90% of the inner gap width (G2) of the inner gap (132) and at least 25% of an outer gap width (G1) of the outer gap (131), preferably at least 50% of the outer gap width of the outer gap, wherein as shown in Figure 1(c) the inner and outer gap widths (G1 , G2) are measured normal to the outer glazing surface (10a).

The beam thickness of the stiffening beam measured normal to W10g must be established to provide the necessary stiffening level to the frameless sash in a direction normal to the outer glazing surface for a particular application. It therefore depends on the material used for producing the second peripheral profile (e.g., unidirectional fibre reinforced composite, chopped fibre reinforced composite, metal), on the size of the stiffened frameless sash, on the beam length, and the like, all parameters that a person of ordinary skill in the art knows how to process in order to reach an optimal beam thickness. The beam thickness needs not be constant over the whole of the beam length as illustrated in Figures 2(a), (b) and 2(d). In Figure 2(a), an edge of the stiffening beam, e.g., the edge facing the outer glazing, can be chamfered to increase the area of the coupling surface and, at the same time, leaving free room for the fixed frame. In Figure 2(b) the coupling surface of the stiffening beam forms a step, which can be advantageously used as a mechanical stop when positioning the second peripheral profile. In Figure 2(d), a portion of the coupling surface adjacent to the inner glazing is chamfered to mate a chamfered support surface (151), which has a trapezoidal cross-section. This geometry allows the second peripheral profile to self-centre upon application thereof. This is particularly advantageous when a rectangular frame is prefabricated by coupling to one another the ends of second peripheral profiles and introducing the thus prefabricated frame over the first peripheral profile as illustrated in Figure 1(b).

The first (31w) and second (31x) walls, both protrude outwards from the outer peripheral surface (i.e., away from the centre of the frameless sash). They are substantially parallel to one another and to the outer glazing surface (10a). A trough (31t) is defined between the first and second walls and faces outwards (i.e., away from the centre of the stiffened frameless sash). As can be seen in Figure 1 (b)&1 (c), when mounted on the frameless sash, the second wall (31x) is positioned adjacent to the inner glazing. It can be adhesively coupled to the inner glazing by adhesive means, such as a double-sided adhesive tape or foam (35a) (cf. Figure 2(d)). This adhesive tape or foam maintains the second peripheral profile (31) in a position coupled to the support surface (151s, 1 52s) of the first profile for a time until it is definitely fixed e.g., with screws. The exact position and breadth of the trough along the thickness of the frameless sash (i.e., in a direction normal to the outer glazing surface) depends on the required position and type of the hardware (34) used to mate in collaboration a complementary hardware mounted in the fixed frame. Generally, the hardware is closer to the inner glazing surface -and even adjacent thereto- than to the outer glazing surface.

**Mechanical Properties of the Second Peripheral Profile (31)**

The mechanical properties required by the stiffened frameless sash depend on the dimensions of the frameless sash and on the specific application. The function of the second peripheral profile is to increase the flexural stiffness and resistance to flexural loads, such as wind and rain. This function is not substantially provided by the first peripheral profile. The main function of the first peripheral profile is to mechanically link the second peripheral profile (31) to the inner or outer peripheral spacer (121, 122), and thence to the glazings and to the whole stiffened frameless sash.

The increase of the bending stiffness and resistance to flexural loads brought by the second peripheral profiles are hence achieved by their geometry and the materials they are made of. As discussed supra, the beam width of the stiffening beam portion (31b) of the second peripheral profile (31) is preferably at least 55% of the inner width, W10g, of the frameless sash, preferably at least 67% of W10g, more preferably at least 75% of W10g. The second peripheral profile (31) has a cross-section forming at least an "F", with the stiffening beam portion (31b) forming the long bar of the 'F' and the first (31w) and second (31x) walls forming the two protruding bars of the "F". The cross-section may comprise a third wall, substantially parallel to the first and second walls (31w, 31x) thus forming an "E". This third wall or any additional wall does increase the moment of inertia of the second peripheral profile (31).

The second moment of inertia, $I$, (or simply "moment of inertia") of a cross-section of the second peripheral profile normal to the outer glazing surface around a centroidal axis, BB', parallel to the outer glazing surface characterizes the geometrical contribution by the second peripheral profile (31) to the stiffening of the frameless sash.

The second moment of inertia, $I_{BB'}$, for an arbitrary planar cross-section R with respect to an arbitrary axis is defined as,

$$I_{BB'} = \iint\limits_{R} \rho^2 \, dA$$

where $dA$ is the differential area of the arbitrary planar cross-section, and $\rho$ is the distance from the axis *BB'* to $dA$. The second peripheral profile (31) preferably has a moment of inertia equal to or greater than 500 mm$^4$, preferably greater than 1000 mm$^4$ and more preferably greater than 2000 mm$^4$.

The loads applied onto the frameless sash by blowing wind or falling rain are mostly flexural loads applied onto and normal to the outer glazing surface from an outer environment. The second peripheral profile is preferably made of a material having good flexural properties, including modulus of elasticity in bending (or flexural modulus) and flexural strength. It is preferred that the second peripheral profile is made of a material having a flexural modulus, G, of at least 5 GPa, preferably at least 15 GPa and more preferably at least 30 GPa or at least 50 GPa. Second peripheral profiles having 5 to 15 GPa moduli can be produced by extruding chopped fibres reinforced composites. For second peripheral profiles having higher flexural moduli, unidirectional glass fibre reinforced composite profiles can be produced by pultrusion. The flexural properties of specific materials can be determined by three-point bending tests as defined e.g., in ASTM D790-07.

## Hardware (34)

A stiffened frameless sash, like any other sash requires hardware (34) to couple the frameless sash to and interact with a fixed frame and other external components, such as a remote control or actuator. The hardware can include hinges and lock / unlock mechanisms for the opening and closing / locking of a window. The hardware can also include motors for automatically opening or closing / locking the window, any actuator, antenna, photovoltaic laminated cell for feeding a battery, electrical contacts and wires, and the like required for actuating the functional elements of "interactive glazings" as discussed supra.

As illustrated in Figure 1(c), the hardware (34) is nested in the trough (31t) of the second peripheral profile (31). The hardware is generally fixed to the trough with mechanical means, such as screws, rivets or snap-fits, preferably screws or rivets. The fixing of the hardware to the trough can be taken advantage of for easier / faster production by fixing at the same time both hardware and second peripheral profile (31) to the first peripheral profile (152), by using screws (33) or rivets long enough to extend through the stiffening beam (31b) of the second peripheral profile and penetrating in the first peripheral profile. Care should be taken to not penetrate the inner peripheral spacer to ensure tightness of the inner gap (132).

## Method for Producing a Stiffened Frameless Sash

The stiffened frameless sash described supra can be produced by a method comprising the following steps illustrated in Figure 1.

A three-glazing unit is formed by stacking an outer glazing (101), an outer peripheral spacer (121), an intermediate glazing (102), an inner peripheral spacer (122), and an inner glazing (103). The inner glazing is separated from the outer glazing by an inner width, W1 0g, forming with the intermediate glazing an outer gap (1 31) and an inner gap (132) between the intermediate glazing (102) and the outer and inner glazings (101, 103), respectively. The inner and outer gaps are enclosed within the inner and outer peripheral spacers (121, 122), respectively.

The inner and outer peripheral spacers also define a peripheral volume extending along the whole of the inner and outer glazing perimeters and comprised between the inner and outer glazings and from the peripheral sides of the inner and outer peripheral spacers to the corresponding inner and outer glazing perimeters.

A first peripheral profile (151, 152) is coupled to one only of the inner peripheral spacer (122) or of the outer peripheral spacer (121), preferably the inner peripheral spacer (122). The first peripheral profile can be integral with the inner or outer peripheral spacer. In this case, the step of coupling them is omitted. The first peripheral profile protrudes into the peripheral volume and defines a support surface facing outwards (i.e., away from the centre of the stiffened frameless sash). The support surface is transverse (i.e., non-parallel), preferably normal to the outer glazing surface (10a) and extends along a whole length of the corresponding inner or outer peripheral spacer (121, 122).

A portion of the peripheral volume excluding the first peripheral profile (151, 152) is filled with a structural resin (16) defining a resin surface (16s). The whole of the support surface of the first peripheral profile remains exposed and free of any structural resin or is covered by a layer of the structural resin having a mean thickness of at most 2 mm, preferably at most 1 mm. Allowing some structural resin to coat at least a portion of the support surface greatly facilitates manufacturing of the stiffened frameless sash, but in case an adhesive is used on the support surface, care should be taken to select an adhesive compatible with the structural resin or to use mechanical fastening means instead (e.g., screws, rivets). The foregoing operations are generally performed by the glass manufacturer. The next steps can be performed by a carpenter or equivalent. It is interesting to note that at this stage, the intermediate glazing edges can be protected from accidental impacts if they are embedded in the structural resin, as illustrated in Figures 2(b)-2(d).

In a preferred embodiment of the method, it is provided a second peripheral profile (31) as discussed supra (cf. Figure 1(b)) comprising;

- a stiffening beam portion (31b) provided with a coupling surface and a peripheral surface opposite the coupling surface, and

- first and second walls (31w,31x) protruding out of the of the peripheral surface.

The second peripheral profile is coupled to the first peripheral profile by joining the coupling surface to the support surface with mechanical means such as screws, rivets or snap-fits, preferably with screws or rivets, or with an adhesive means, such as an adhesive resin or a double-sided adhesive tape (35a) or foam (35f), or with a combination of mechanical and adhesive means. The second peripheral profile (31) can be joined to the first peripheral profile by applying second peripheral profile segments at each edge of the frameless sash. Once all four segments have been applied, the ends of each pair of adjacent segments must be joined to one another to form a rectangular frame. Since with this solution each individual second peripheral profile segment can be brought into contact with the support surface of a corresponding first peripheral profile independently of the other second peripheral frame segments, this solution is interesting in case several edges of the outer and intermediate glazings are not aligned, as well as in case the second peripheral profile defines an inner glazing perimeter which is smaller than the outer- or intermediate-glazing perimeter.

In an alternative embodiment, a rectangular frame is prefabricated to the desired dimensions by joining two by two the ends of four segments of the second peripheral profile. The prefabricated frame can be introduced over the outer glazing and along a direction normal to the outer glazing surface, as illustrated in Figure 1(b). This operation is only possible if the inner glazing perimeter is larger than and encloses the outer glazing perimeter and, if the first profile (151) is coupled to the inner peripheral spacer (121), larger than and encloses the intermediate glazing perimeter. This solution allows the ends of each segment of the second peripheral profile to be optimally joined to one another; and facilitates the coupling of the second peripheral profile to the first peripheral profile leading to easier manufacturing.

The hardware (34) is fitted into the trough defined between the first and second walls (31w,31x) of the second peripheral profile. The hardware is preferably fixed to the second peripheral profile with screws (33) or rivets. It is preferred that the screws (33) or rivets extend through the stiffening beam portion (31b) of the second peripheral profile and penetrate through a portion of the first peripheral profile (151, 152), without contacting the corresponding inner or outer peripheral spacer, which the first peripheral profile is coupled to.

The present invention is also directed to a window comprising at least a stiffened frameless sash (110), a fixed frame (20) and sealing elements (3).

**Fixed Frame**

The stiffened frameless sash (10) is coupled to a fixed frame (20) defining a frame opening. The frame opening has an outer face bounded by an outer frame perimeter of the fixed frame, mating the outer glazing perimeter of the frameless sash, and has an inner face bounded by an inner frame perimeter of the fixed frame, mating the inner glazing perimeter of the frameless sash. The frame opening accommodates the stiffened frameless sash or sashes when the window is closed and brings in fluid communication the inner and outer environments when the window is open. The fixed frame is formed by one or more fixed frame profiles (21). The fixed frame profiles can be made of aluminium, which is weathering resistant but has low insulating properties, or they can be made of a more insulating material, such as wood or some polymers or fibre reinforced polymer composite materials, but they are weathering-sensitive materials (which are sensitive to UV-radiation or to hydrolysis). Because the windows of the present invention focus on high energy performance, insulating materials are preferred to aluminium for the fixed frame profiles. The fixed frame profile has an inner side facing the inner environment and comprising the inner frame perimeter of the fixed frame, and an outer side facing the outer environment and comprising the outer frame perimeter of the fixed frame. The fixed frame profile has a thickness, W21, measured normal to the outer surface (10a) when the stiffened frameless sash is in a closed position.

The fixed frame profile (21), is preferably highly thermally insulating performant. In particular, the heat transfer coefficient, Uf, of the fixed frame profile is not more than 1.6 W / m$^2$ K, preferably not more than 1.2 W / m$^2$ K and more preferably not more than 0.7 W / m$^2$ K. Because aluminium fixed frames yield the worst heat transfer coefficients, Uf, the fixed frame profile of a window according to the present invention can be made of wood, polymer, a fibre reinforced polymer composite or a combination thereof. In a preferred embodiment of the present invention, the fixed frame profile preferably has a thickness, W21, of not more than 85 mm, preferably not more than 75 mm, more preferably not more than 70mm. Limiting the thickness of the fixed frame profile allows the available interior volume of a living space to be increased for a given external floor area of a building.

In a preferred embodiment, which is of particular interest if the fixed frame profile is made of a highly thermally insulating material which is generally weathering-sensitive, a cover plate (22) is coupled to and covers at least 10% of a surface area of the outer side of the fixed frame profile over substantially a whole of the outer frame perimeter. The cover plate has the function of protecting the fixed frame profile from weathering by exposure to UV and humidity. A portion of the fixed frame profile can be embedded in the wall and therefore not exposed to the outer environment. The cover plate can therefore preferably cover up to 100% of the exposed surface area of the outer side of the fixed frame profile when it is mounted in a tunnel of a wall (i.e., 100% of the surface area which is not embedded in the wall). The cover plate can cover from 20 to 100% of the surface area of the outer side of the fixed frame profile, preferably from 30 to 90%, more preferably from 40 to 80%.

The cover plate has a thickness, W22, measured normal to the outer surface (10a) when the stiffened frameless sash is in the closed position. To increase the available interior volume of a living space for a given external floor area of a building, the cover plate thickness, W22, is preferably not more than 15 mm, preferably not more than 10 mm and more preferably not more than 7 mm. The fixed frame has a thickness, W20, measured normal to the outer surface (10a) when the stiffened frameless sash is in the closed position . A fixed frame comprising fixed frame profiles and cover plates has a thickness W20 which is approximately the sum of the thickness W21 of the fixed frame profiles and the thickness W22 of the cover plates, $W20 \simeq W21 + W22$ (i.e., $W20 \simeq W21 + W22$, ignoring the interpenetration of any coupling elements between profile and cover plate). In this case, the fixed frame profile preferably has a thickness, W21, of not more than 70 mm, preferably not more than 65 mm, more preferably not more than 60mm.

The fixed frame profile is preferably made of a material selected for its high insulating properties, whilst the cover plate material is preferably selected for its weathering resistance to exposure to UV and moisture and does not necessarily have good insulating properties. The cover plate is used to protect the weathering-sensitive material of the fixed frame profile from aggressions by the external environment, especially UV-light, and also for protecting the fixed frame profile as well as the inner frame of the frameless sash from external moisture and water. The cover plate has a resistance to UV higher than the resistance to UV of both fixed frame profile (21) and sealing elements (3), and forms a barrier against water and UV for the sealing elements (3) and at least for part of the fixed frame profile, preferably the whole of the exposed surface area of the outer side of the fixed frame (i.e., not embedded in the wall). To fulfil these requirements, the cover plate is made of a weathering-resistant material, such as a metal (e.g., aluminium or steel), UV-resistant polymers or composite materials, or ceramics.

If the fixed frame profiles are made of a weathering resistant material a cover plate is not essential and can be either omitted or included. In case the fixed frame comprises no cover plate, the thickness W20 of the fixed frame is the same as the thickness W21 of the fixed frame profiles, W20 = W21 .

For guaranteeing a high thermal insulation, airtightness and a high acoustic insulation of the window of the present invention, the thickness ratio, W21 / W20, of the fixed frame profile (21) to the fixed frame (20) is at least 80%, preferably at least 90%, more preferably at least 95%. The corollary is that the thickness ratio, W22 / W20, of the cover plate (22) to the fixed frame (20) is not more than 20%, preferably not more than 10%, more preferably not more than 5%.

In a preferred embodiment, the thickness, W20, of the fixed frame of a window of the present invention is preferably equal to the sash thickness, W1 0, of the stiffened frameless sash, within a tolerance of $\pm$ 5% (i.e., W20 = W1 0 (1 $\pm$ 5%)), preferably of $\pm$ 2% (i.e., W20 = W10 (1 $\pm$ 2%)), such that when the stiffened frameless sash is in the closed position, the inner face of the fixed frame is substantially flush or aligned with the inner surface of the inner glazing (103), and the outer face of the fixed frame is substantially flush or aligned with the outer surface of the outer glazing (101). With both inner and outer surfaces of the stiffened frameless sash being substantially flush with the inner and outer faces of the fixed frame (20) continuous smooth surfaces without any protrusion nor any significant recesses extend over the whole area of both sides of the window. Besides obvious aesthetical advantages, this configuration is particularly advantageous in terms of cleaning as, on the one hand, there are no corners, edges, etc. wherein dirt can accumulate and become difficult to remove and, on the other hand, the whole of both inner and outer surfaces of the window can be cleaned with a continuous movement of a squeegee, thus substantially facilitating cleaning of the window. Furthermore, since all sealing elements are internal (i.e., located between the inner and outer glazings of the stiffened frameless sash when it is in the closed position), rain water or cleaning water flows over the surface of the glazing without substantially contacting any sealing element.

A further advantage of designing a window with the stiffened frameless sash and fixed frame being flush along both inner and outer surfaces is the enhancement (i.e., increase) of the opening ratio, A0 = Af / At, of the area of the frame opening to the area of the tunnel in the wall. The opening ratio defines the fraction of a given tunnel area which is masked by the fixed frame. The higher this fraction, the more efficient is the window. To date, in frameless sashes coupled to fixed frame profiles provided with cover plates, the cover plates overlap with the frameless sash, generally for supporting a sealing element squeezed between the cover plate and the outer surface of the frameless sash when it is in the closed position. The free ridge of the cover plate (i.e., bounding the outer glazing perimeter of the frame opening) is therefore the innermost structure of the fixed frame defining the perimeter of the frame opening. The frame opening area is therefore necessarily smaller than the outer surface area and when the frameless sash is opened, the frame opening is smallerthan could be expected in view of the dimensions of the frameless sash. This is clearly visible in the Figures of EP3228795 or EP2436865.

By contrast, with the present embodiment, the frame opening has substantially the same area as the outer surface of the stiffened frameless sash (within tolerances to allow free rotation of the stiffened frameless sash with respect to the fixed frame). When the stiffened frameless sash is in the open configuration, the frame opening thus exposed has same area as the stiffened frameless sash, thus increasing the opening ratio with respect to a fixed frame comprising a cover plate overlapping the stiffened frameless sash. This effect is far from being negligible. For example, a cover sheet overlapping with the outer glazing perimeter by merely 1 cm, reduces the opening ratio by about 4% for a small dimension 100 x 100 cm sash, and by about 8% for a 200 x 200 cm sash, compared with a cover plate flush (i.e., not overlapping) with the frameless sash.

The fixed frame is provided with receiving elements (34f) for coupling the stiffened frameless sash to the fixed frame in the closed position, closing the frame opening, wherein the inner and outer glazing perimeters of the stiffened frameless sash are coupled to the inner and outer frame perimeters of the fixed frame, respectively. In particular, the receiving elements are designed to accommodate the hardware (34) of the inner frame of the stiffened frameless sash, as illustrated in Figures 1(c), 1(d), and 3 to 6.

**Sealing Elements**

As shown in Figures 3 to 6, the window of the present invention comprises sealing elements (3) for sealingly closing the frame opening when the stiffened frameless sash is in the closed position, i.e., when the stiffened frameless sash closes the frame opening, with the inner and outer glazing perimeters of the stiffened frameless sash being coupled to the inner and outer frame perimeters of the fixed frame, respectively.

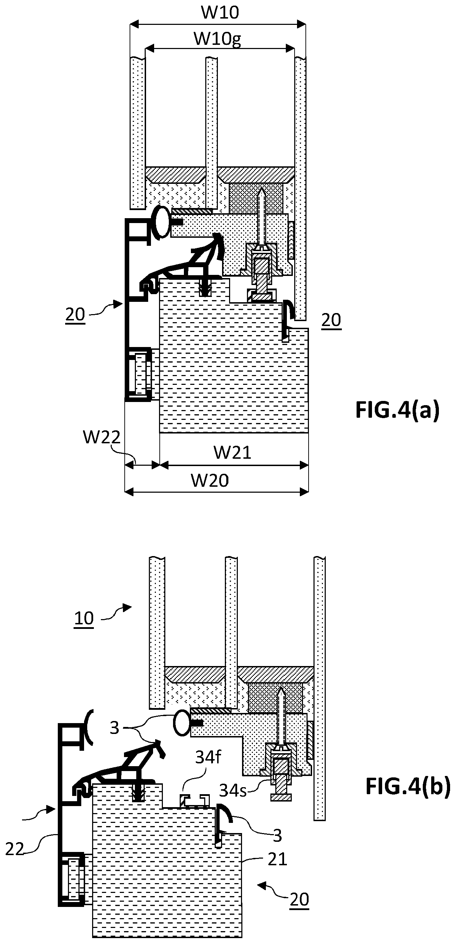

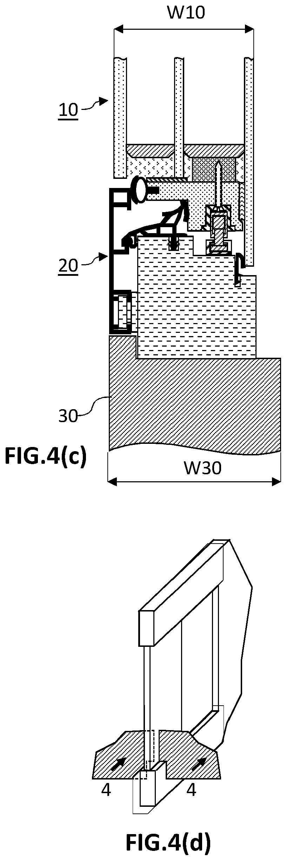

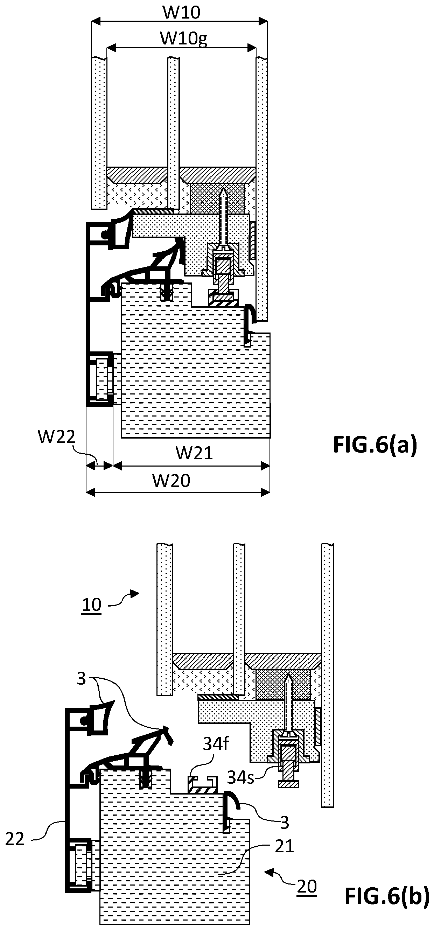

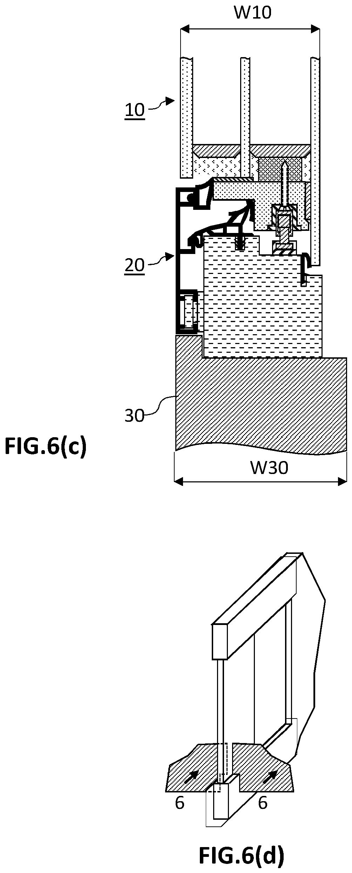

As illustrated in Figures 5 and 6, all sealing elements can be mounted on the fixed frame, e.g., at a frame edge of the fixed frame profile which is transverse to the inner and outer sides of the fixed frame profile, and/or at the cover plate. Alternatively or concomitantly, the sealing elements can be mounted on the stiffened frameless sash at a sash edge transverse to the inner and outer surfaces, as shown in Figures 3 and 4. When the stiffened frameless sash is in the closed position, the sealing elements are deformed as the sash edge of the stiffened frameless sash fits into the mating frame edge of the fixed frame, thus forming a seal between the fixed frame and the stiffened frameless sash when the latter is in the closed position.

**Coupling of the Stiffened Frameless Sash to the Fixed Frame**

The fixed frame comprises receiving elements for coupling the stiffened frameless sash to the fixed frame in the closed position, closing the frame opening. In a particular embodiment, the stiffened frameless sash can be fixedly coupled to the fixed frame. The fixed coupling can be reversible, in that the stiffened frameless sash can be dismounted from the fixed frame but cannot open and close like a typical window, while remaining coupled to the fixed frame, eg., through hinges.

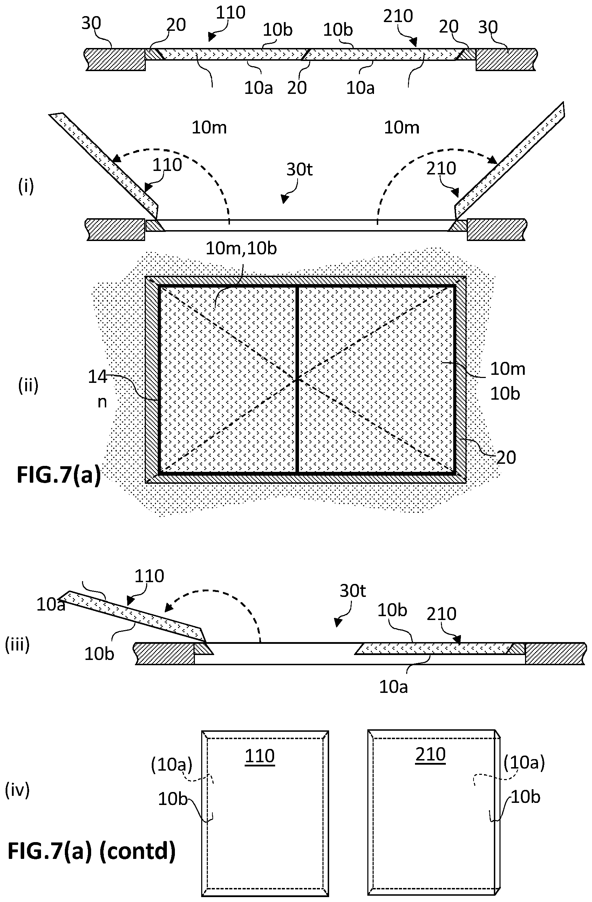

In an alternative embodiment, the stiffened frameless sash is movingly coupled to the fixed frame such that the stiffened frameless sash can reversibly move with respect to the fixed frame (20) from the closed position to an open position wherein the stiffened frameless sash leaves open at least a portion of the frame opening, by rotation of the stiffened frameless sash about hinges fixed to the fixed frame and defining a rotating axis parallel to the outer surface (10a) when the frameless sash is in the closed position (cf. Figure 7(a)-7(c)).

When hinges are hidden, it may be necessary to provide an opening trajectory of a movable sash about more than one rotating axis or combining a translation and rotation about a rotating axis, to give clearance at the level of the edges adjacent to the at least one rotating axis during the opening trajectory.

In a preferred embodiment, the window comprises a mechanically, pneumatically or electrically actuating device for reversibly moving the stiffened frameless sash (10) with respect to the fixed frame (20) from the closed position to the open position and reverse. The actuating device can be activated with a switch located on the window or on the wall (30) supporting the window. Alternatively, or additionally, the actuating device can be activated by means of a remote-control system, including a receiver integrated in the stiffened frameless sash and/or the fixed frame for actuating the moving of the stiffened frameless sash. The remote-control system can preferably also control any functionality of the glazing as discussed supra in the section entitled "glazing", such as an electrochromic device, a multimedia connection, an antenna, communication means, a TV set, a light source including a LED, a loudspeaker, a sensor, and the like.

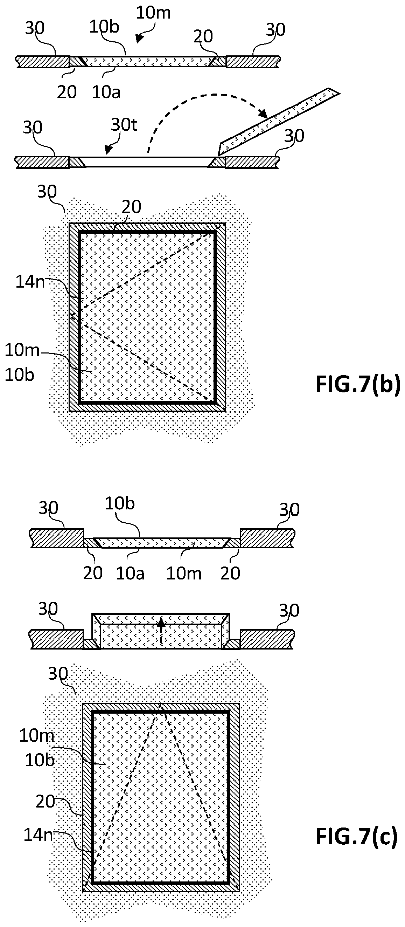

Figure 7 illustrates different possible configurations of the window of the present invention.

Figure 7(a) shows a casement window (it could be a glass-door if the stiffened frameless sashes extend to the floor), comprising two moving sashes mounted on hinges aligned such as to define vertical axes of rotation. This window design illustrates one possible *"stulp"* configuration. The triangles in dashed lines indicate the direction of opening, with the summit indicating the sash edge opposite to the hinges and moving away from the fixed frame and the (vertical) base indicating the rotating axis defined by the positions of the hinges. Figure 7(b) shows a similar casement window as in Figure 7(a) but comprising a single stiffened frameless sash instead of two frameless sashes.

Figure 7(c) shows a tilting stiffened frameless sash coupled to the fixed frame by hinges located at the lower horizontal edge of the fixed frame. The top edge of the stiffened frameless sash can thus be moved away from the top edge of the fixed frame by rotation about a horizontal rotating axis. Most tilting sashes can also be opened by rotation about a vertical rotating axis as discussed with respect to Figure 7(b), thus combining both modes of opening. Such windows are called *"tilt and turn"* windows.

In a particular embodiment of the present invention, the window comprises a single stiffened frameless sash that is movingly or fixedly coupled to the fixed frame. As discussed supra, the sash has an inner glazing area larger than or equal to the outer glazing area. It has also an inner glazing area larger or equal to the intermediate glazing area.

It is preferred that at least one or two edges of the outer (1 01) and intermediate glazings (102) be flush, i.e., aligned on a plane normal to the outer glazing surface. This configuration facilitates the positioning of the outer and intermediate glazings during manufacturing of the triple-glazing unit. More preferably at least three edges are aligned. This configuration facilitates the insertion of a prefabricated frame made of four segments of second peripheral profiles fixed two by two. Additionally to or independently of the alignment of one or more edges of the outer and intermediate glazings as discussed supra, for forming a sealed contact between a stiffened frameless sash and a corresponding fixed frame and thus forming an air- and water-tight window, it is preferred that at least three edges of the inner glazing (103) be stepped outwardly with respect to both intermediate glazing (102) and outer glazing (101). In other words, on a projection on a plane parallel to the outer glazing surface, the inner glazing perimeter of the inner glazing encloses at least three edges of both outer and intermediate glazing perimeters.

More preferably, the four edges of the outer and intermediate glazings are flush,. This configuration allows reducing the costs of manufacturing, as this configuration corresponds to a conventional process for producing a double-glazing unit (cf. Figures 1, 2(a), and 3 to 6). Additionally to or independently for forming a sealed contact between a stiffened frameless sash and a corresponding fixed frame, it is preferred that all four edges of the inner glazing (103) be stepped outwardly with respect to both intermediate glazing (102) and outer glazing (101). The inner glazing perimeter of the inner glazing hence encloses the four edges of both outer and intermediate glazing perimeters. In consequence, the inner glazing area is larger than the area of the intermediate and of the outer glazings. Of course, the fixed frame has a matching geometry with a larger inner glazing perimeter of the frame opening than the outer glazing perimeter of the frame opening. This gives the great advantage of enhancing sealing of the interface between the stiffened frameless sash and the fixed frame. Indeed, as illustrated in Figures 3 to 6, several surfaces of both sash and fixed frame, which are substantially parallel to the outer surface, when the stiffened frameless sash is in the closed position, can thus face each other and abut when the frameless sash in the closed position. By providing sealing elements between two such facing and abutting surfaces, a tight sealed contact can be formed between the stiffened frameless sash and the fixed frame.

Examples of windows comprising a single stiffened frameless sash that is movingly coupled to the fixed frame are illustrated in figures 7(c) and 7(d).

In another particular embodiment of the invention, the window is a casement window comprising a first stiffened frameless sash (110) that is movingly coupled to the fixed frame, and a second stiffened frameless sash (210) that is either fixedly or movingly coupled to the fixed frame and said window is devoid of mullion between the two sashes.

In this embodiment, a first sash (110) is a sash that does not comprise a third profile (41) as will be described later. It is also the sash that opens first when the window comprises a second sash that is movingly coupled to the fixed frame. A second sash (210) is a sash comprising a third profile (41) that will be described later.

In this embodiment, the first and the second sashes comprise each a middle edge. The middle edges of the sashes are those facing each other when the sashes are in the closed position (figure 7(a)). Contrary to the other three edges which rest on a section of the fixed frame (20) in the closed position, the middle edge of the second sash (210) acts as the mullion of a standard fixed frame and receives the middle edge of the first sash, which rests thereon.

Figure 7(a) illustrates in (i)-(ii) a stulp window wherein both first and second sashes are rotatably mounted on the fixed frame, each opening and closing a respective portion of the frame opening by rotation about a first and second rotating axis, respectively. In (iii) the casement window comprises a first sash (110) which is rotatably mounted on the fixed frame, and a second sash (210) which is fixedly mounted on the fixed frame. In Figure 7(a)(iv), a front view of first sash (110) and second sash (210) is illustrated looking at the inner surface (10b) of each sash. The dotted lines are lines located behind the inner surface (10b) and comprised within the inner glazing perimeter. It can be seen that, depending on the function of the stiffened frameless sash, the geometries of the edges may vary.

In this embodiment, the first sash (110) of the window has the same particular features as those detailed supra for the sash of the window comprising a single sash. For example, it can be seen in Figure 7(a), that the first sash (110) (= stiffened frameless sash on the left-hand side of Figure 7(a)(i)-(iii)) is characterized by a trapezoidal cross-section on a plane normal to the first or second rotating axes. Figure 7(a)(iv) shows that the inner glazing (103) has a larger inner glazing area than both intermediate and outer glazings (101, 102) and the inner glazing perimeter extends beyond the intermediate and outer glazing perimeters over the four edges of the stiffened frameless sash.

In this embodiment, the second sash (210) can be a moving or a fixed sash and in each case comprises a third profile (41) that is coupled to the whole length of the middle edge thereof. The three other edges of the second sash (210) which rest on the fixed frame (20) do not comprise such third profile (41) and are as illustrated in Figures 3-6. The third profile (41) changes the structure of the middle edge of the second sash (210) such that it sealingly mates the middle edge of the first sash (110).

Here again, as discussed supra, the sash has an inner glazing area larger than or equal to the outer glazing area. It has also an inner glazing area larger or equal to the intermediate glazing area.

It is preferred that at least one or two edges, more preferably three of the outer (101) and intermediate glazings (102) be flush, i.e., aligned on a plane normal to the outer glazing surface. This configuration facilitates the positioning of the outer and intermediate glazings during manufacturing of the triple-glazing unit and facilitates the insertion of a prefabricated frame made of four segments of second peripheral profiles fixed two by two. Additionally to or independently, for forming a sealed contact between the second sash and the fixed frame and thus forming an air- and water-tight window, it is preferred that three edges of the inner glazing (103) be stepped outwardly with respect to both intermediate glazing (102) and outer glazing (101). In other words, on a projection on a plane parallel to the outer glazing surface, the inner glazing perimeter of the inner glazing encloses preferably three edges of both outer and intermediate glazing perimeters.

It is for instance illustrated on Figure 7(a)(iii)-(iv) where by contrast to the first sash the second sash (210) preferably has a (nearly) parallelogram-cross-section, with the inner glazing (103) extending beyond the outer glazing (101) over all edges but the middle edge. At the middle edge, it is the outer glazing (101) of the second sash (210) which extends beyond the inner glazing (103).

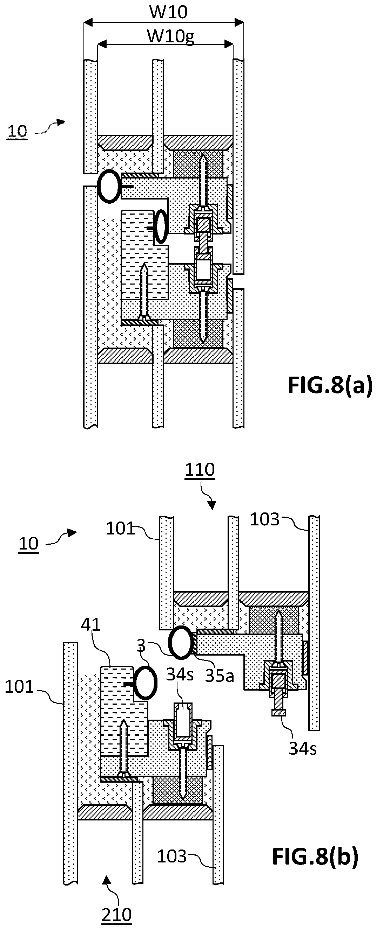

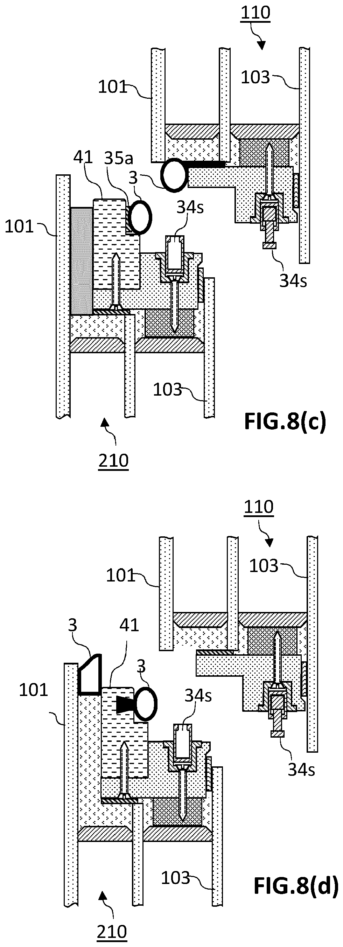

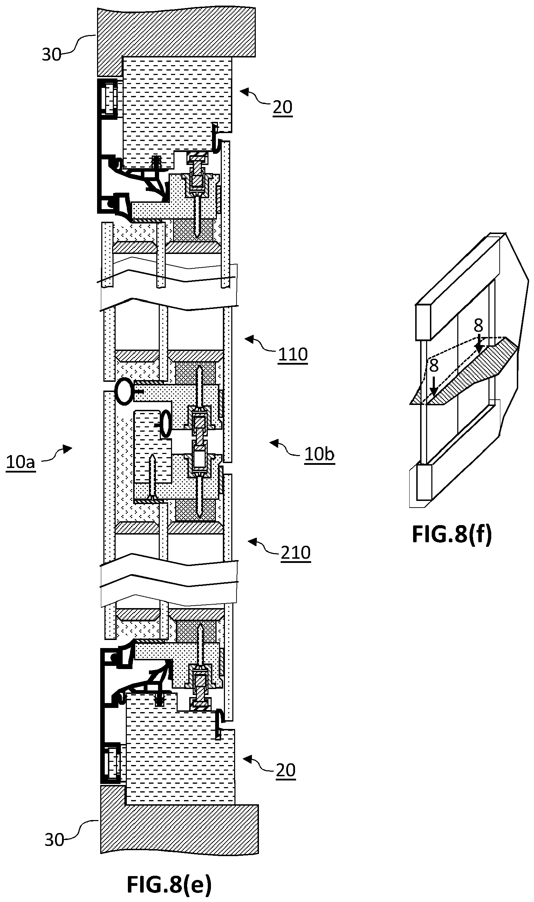

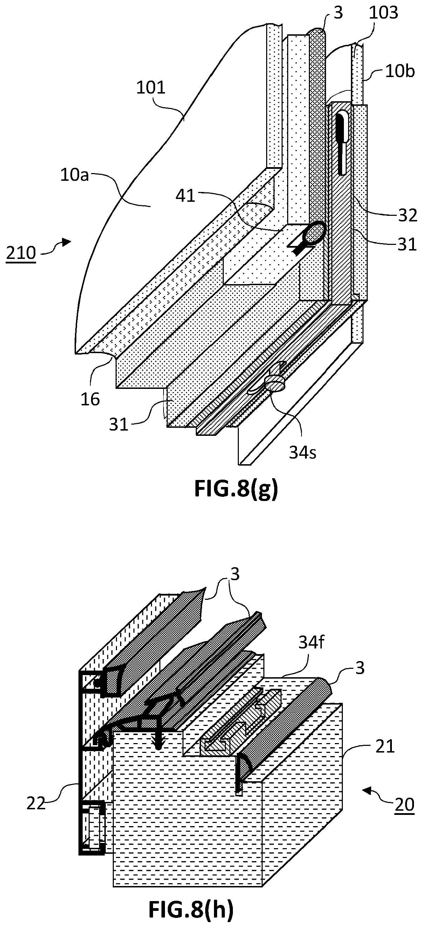

The third profile (41) is fixed to the stiffening beam portion of the second peripheral profile (31) of the second sash by mechanical and/or adhesive means such as for example with a screw as illustrated in Figure 8 and/or with glue or adhesive tape. To hide the screw, the third profile can be coupled to the second profile prior to coupling the second profile to the second sash. The third profile (41) fills the space created by the change of cross section of the second sash (210), wherein the outer glazing (101) extends beyond the inner glazing (103) at the level of the middle edge.

The sealing of the gap formed between the middle edges of the first and second foot of the stiffening beam portion of the second peripheral profile (31). Like the sealing element coupled to the third profile (41) discussed supra, the sealing element (3) can be coupled to the foot of the stiffening beam portion by clamping a tong in a groove running along the third profile (cf. Figure 8(a)), with an adhesive resin or adhesive tape (cf. Figure 8(b)), or by coextrusion. Alternatively, the sealing element can be coupled to the foot of the beam portion of the second peripheral profile (31) of the second sash by a flange extending substantially tangentially with respect to the sealing element. Said flange is inserted between the second peripheral profile and the resin surface (16s) and replaces the foam layer (35f) discussed earlier with respect to Figure 1. The flange can be glued to or coextruded with the second peripheral profile.

The same function as the sealing element coupled to the foot of the stiffening beam portion of the second peripheral profile (31) can be fulfilled by a sealing element (3) fixed to the second sash (210), as illustrated in Figure 8(d). The sealing element can be glued to the inner surface of the outer glazing (101). In this embodiment, the first sash does not require to support any sealing element (3).

The third profile (41) preferably has a low thermal conductivity, to avoid the formation of a thermal bridge across the thickness of the second sash (210). The coefficient of thermal expansion (CTE) of the third profile is preferably compatible with the CTE's of the other components of the second sash and is preferably lower than 400% of the CTE of any of the glasses forming the glazings (101-103). The third profile (41) is preferably made of a polymer, preferably reinforced with fibres, chopped, long, or continuous, of typical reinforcing fibres, such as glass, carbon, aramid, vegetal, and mixtures thereof, depending on the mechanical requirements of the window and the target cost. The third profile can be a polymer reinforced with chopped fibres and produced by extrusion. Alternatively, it can be reinforced with continuous fibres and produced by pultrusion. The third profile can be bulk or hollow, depending on the material used, mechanical properties required, and means of fixing the third peripheral profile (41) to the second peripheral profile.

For windows of large dimensions exposed to winds and the like, the third profile can also contribute to a stiffening of the middle edges of a stulp window.

The space between on one hand the third profile (41) and the foot of the second peripheral profile (31) and, on the other hand the outer glazing (101) is filled with a material that can be the same or different of the structural resin (16) (figure 8(c) illustrates materials that are different).

Figure 8(g)&8(h) shows a perspective view of a corner of a second sash (210) and a portion of fixed frame (20). It can be seen that a continuously sealed contact can be formed between the second sash and the fixed frame (20). When the first sash (110) (not shown) is closed upon the second sash (210), all interfaces between the two sashes and with the fixed frame (20) are properly sealed by a sealing element (3). If required, an additional sealing insert element (not shown) can be provided at the corner of the first or second sash, to ensure that any gap formed at the meeting point between the first sash (110), second sash (210), and fixed frame (20) is closed and/or to press the sealing element(s) (3) of the fixed frame (20) at said meeting point to ensure formation of an optimal seal.

The same arrangement of the middle edge of the second sash comprising a third profile (41) as discussed supra applies for a fixed or a movable second sash (210).

**Window** Assembly

The window of the present invention is used for allowing light to pass through an opening in a wall. In many cases, a window can be opened to bring in fluid communication inner and outer environments separated from one another by said wall. To this purpose, the wall (30), which separates the inner environment from the outer environment, is provided with a through opening in the form of a tunnel (30t) defined by a tunnel perimeter. The fixed frame (20) is sealingly coupled to the tunnel perimeter, with the inner face of the fixed frame facing the inner environment and the outer face of the fixed frame facing the outer environment. When the stiffened frameless sash is in the closed position, the inner environment is separated from the outer environment by the window.

The opening ratio, A0 = Af / At, defined above, wherein Af, and At are the areas of the frame opening and of the tunnel, respectively, depends on the dimensions of the fixed frame. The opening ratio decreases with an increase of the fixed frame height, measured parallel to the outer surface of the outer glazing when the stiffened frameless sash is in the closed position. Conversely, the lower the height of the fixed frame, the higher the value of the opening ratio.

The wall (30) has a thickness, W30, measured normal to the outer surface (10a) of the outer glazing when the stiffened frameless sash is in the closed position. The thickness, W30, of the wall can be greater than or equal to the thickness, W20, of the fixed frame, W30 ≥ W20. In a preferred embodiment, the inner face of the fixed frame is flush with the wall at the inner environment as illustrated in Figure 7(a)&7(b). In an alternative embodiment illustrated in Figures 7(b), and 7(c), the outer face of the fixed frame is flush with the wall at the outer environment. In yet a preferred embodiment, for particularly thin walls and for increasing the available interior volume of a living space for a given external floor area of a building, both inner and outer faces of the fixed frame are flush with the wall at the inner and outer environments, as illustrated in Figure 7(b).

The present invention offers a solution for cost-effectively producing frameless sashes of high mechanical properties. The production is simplified for the following reasons.

- The position of the intermediate glazing needs not be specified within narrow tolerances, so that the same first and second peripheral profiles can be used for stiffening frameless sashes comprising any type of functional intermediate glazing,
- The edges of the intermediate glazing need not be machined and are protected from accidental impacts.
- Any actuator, electrical connexion, photovoltaic laminated cell for feed battery, and the like required for actuating functional glazings can be accommodated within the peripheral volume without changing the peripheral profiles.
- The same first and second peripheral profiles can be used for different types of frameless sashes used for different types of windows, including fixed windows, casement windows comprising at least one sash, tilt and rotate windows. This applies to the middle edges of a first sash of a casement window comprising first and second sashes, which are simply complemented with a third profile (41).
- Neither the first nor the second peripheral profile needs contacting any of the inner and outer glazing, thus enhancing the thermal insulating properties of the frameless sash.
- Production is highly reproducible as prefabricated frames made of segments of second peripheral profiles can be mounted accurately before introducing the prefabricated frame over the outer glazing until it contacts the support surfaces of the first peripheral profiles coupled to the inner (or outer) peripheral spacers over the whole perimeter of the frameless sash.

| REF | FEATURE |
|------|---------|
| 3 | Sealing element |
| 10 | Stiffened frameless sash |
| 10a | Outer surface of outer glazing |
| 10b | Inner surface of inner glazing |
| 10f | Fixed frameless sash |
| 10m | Moving frameless sash |
| 101 | Outer glazing |
| 102 | Intermediate glazing |
| 103 | Inner glazing |
| 11 | inner frame |
| 110 | First frameless sash of a stulp window |
| 121 | outer peripheral spacer |
| 122 | inner peripheral spacer |
| 131 | Outer gap |
| 132 | Inner gap |
| 141 | Peripheral region of the outer glazing |
| 143 | Peripheral region of the inner glazing |
| 151 | First peripheral profile coupled to the outer peripheral spacer |
| 151s | Support surface of the first peripheral profile |
| 152 | First peripheral profile coupled to the inner peripheral spacer |
| 152s | Support surface of the first peripheral profile |
| 16 | Structural resin |
| 16s | resin surface |
| 20 | Fixed frame |
| 21 | Fixed frame profile |
| 22 | Cover plate |
| 210 | Second frameless sash of a stulp window |
| 30 | Wall |
| 30t | Wall tunnel |
| 31 | Second peripheral profile |
| 31f | Stiffening beam portion of the second peripheral profile |
| 31t | Trough defined between first and second walls (31w,31x) |
| 31w | First wall of the second peripheral profile |
| 31x | Second wall of the second peripheral profile |
| 33 | Mechanical fastening means, screw |

EP 3 877 618 B1

(continued)

| REF | FEATURE |
|---|---|
| 34 | Sash hardware |
| 34f | receiving elements on fixed frame |
| 34s | locking / unlocking mechanism on sash |
| 35a | Double sided adhesive tape or foam |
| 35f | foam layer |
| 41 | Third profile |
| | |
| A0 | Opening ratio |
| Af | Area of the frame opening |
| At | Area of the tunnel |
| G1 | Width of the outer gap measured normal to the outer glazing surface |
| C2 | Width of the inner gap measured normal to the outer glazing surface |
| W10 | Thickness of stiffened frameless sash |
| W10g | inner width |
| W20 | Thickness of fixed frame |
| W21 | Thickness of fixed frame profile |
| W22 | Thickness of cover plate |
| W30 | Wall thickness |

**Claims**

1. A stiffened frameless sash (10) comprising,

   (a) an outer glazing (1 01) defining an outer glazing surface (10a) having an outer glazing area and bounded by an outer glazing perimeter,
   (b) an inner glazing (103) defining an inner glazing surface (10b) having an inner glazing area larger than or equal the outer glazing area, and bounded by an inner glazing perimeter, the inner glazing being separated from the outer glazing by an inner width, W10g,
   (c) an intermediate glazing (102) parallel to both inner and outer glazings and bounded by an intermediate glazing perimeter, the intermediate glazing being positioned between the inner and outer glazings, separated from the outer glazing (101) by an outer gap (131) and from the inner glazing (103) by an inner gap (132), ,
   (d) an outer peripheral spacer (121) separating the outer glazing from the intermediate glazing and comprising an outer gap side defining an outer gap perimeter of the outer gap, and comprising a peripheral side opposite the outer gap side,
   (e) an inner peripheral spacer (122) separating the inner glazing from the intermediate glazing and comprising an inner gap side defining an inner gap perimeter of the inner gap, and comprising a peripheral side opposite the inner gap side,
   (f) a peripheral volume extending along the whole of the inner and outer glazing perimeters, and comprised between the inner and outer glazings and from the peripheral sides of the inner and outer peripheral spacers to the corresponding inner and outer glazing perimeters,

   **characterized in that,** the stiffened frameless sash further comprises,

   • a first peripheral profile (151, 152) fixed to or integral with the peripheral side of one only of the inner peripheral spacer (122) or of the outer peripheral spacer (121), the first peripheral profile protruding into the peripheral volume and defining a support surface (151s, 1 52s) facing outwards, said support surface being transverse, preferably normal to the outer glazing surface (10a) and extends along a whole length of the corresponding inner or outer peripheral spacer, and **in that,**

• a portion of the peripheral volume excluding the first peripheral profile (151, 152) is filled with a structural resin (16) defining a resin surface (16s), with a whole of the support surface of the first peripheral profile remaining exposed and is free of structural resin or is covered by a layer of the structural resin having a mean thickness of not more than 2 mm, preferably not more than 1 mm.

2. Stiffened frameless sash according to claim 1, further comprising a second peripheral profile (31) extending over a whole perimeter of the stiffened frameless sash and in contact with the whole of the support surface (151s, 152s) or of the layer of the structural resin covering the support surface, and comprising,

• a stiffening beam portion (31b) comprising an outer peripheral surface facing outwards, and a coupling surface fixed to the support surface of the first peripheral profile (151, 152), preferably with screws or an adhesive, the coupling surface extending over at least 55% of the inner width, W10g, preferably at least 67% of W10g, more preferably at least 75% of W10g, and preferably not more than 90% of W10g, and
• a first (31w) and second walls (31x), both protruding outwards from the outer peripheral surface, and substantially parallel to the outer glazing surface (10a), the first and second walls defining a trough (31t) there between facing outwards, the second wall being positioned adjacent to the inner glazing.

3. Stiffened frameless sash according to claim 2, wherein the second peripheral profile (31) comprises a third wall substantially parallel to the first and second walls (31w,31x).

4. Stiffened frameless sash according to claim 2 or 3, wherein in a projection onto a plane normal to the outer glazing surface (10a), the second peripheral profile (31) covers at least 90% of an inner gap width (G2) of the inner gap (132) and at least 25% of an outer gap width (G1) of the outer gap (131), preferably at least 50% of the outer gap width of the outer gap, wherein the inner and outer gap widths (G1, G2) are measured normal to the outer glazing surface (10a).

5. Stiffened frameless sash according to any one of claim 2 to 4, wherein the first peripheral profile and/or the second peripheral profile are made of extruded or pultruded fibre reinforced polymer composite, preferably glass fibre reinforced, and wherein the second peripheral profile preferably made of a material having a flexural modulus, G, of at least 5 GPa, preferably at least 15 GPa and more preferably at least 30 GPa or at least 50 GPa, wherein the flexural modulus is measured on a three-point bending mode according to ASTM D790-07.

6. Stiffened frameless sash according to any one of claim 2 to 5, further comprising sash hardware (34), fitted in the trough (31t), wherein the sash hardware is preferably fixed to the trough with screws or rivets extending through the second peripheral profile and through a portion of the first peripheral profile.

7. Stiffened frameless sash according to any one of the preceding claims wherein the inner glazing (103) and the outer glazing (101) comprise an inner peripheral region (143) and an outer peripheral region (141) extending inwardly from an edge of the inner and outer glazings, along the whole of the inner and outer glazing perimeters, respectively, to preferably at least the inner and outer peripheral spacers (121, 122) contacting the corresponding glazing, wherein the inner and outer peripheral regions have a visible light transmission, TL, at least 50% lower than the inner glazing (103) and the outer glazing (101), outside of the respective inner and outer peripheral reqions, and is preferably opaque.

8. Stiffened frameless sash according to any one of the preceding claims, wherein at least one glazing (101, 102, 103),

• Is provided with a heat ray reflection film and/or a low-emissivity film, and/or
• Forms an interactive glazing and is preferably provided with an electrochromic device, a thermochromic device, a photochromic device, a photovoltaic device, a multimedia connection, an antenna, communication means, a TV set, a light source including a LED, a loudspeaker, a sensor including an irradiance-, temperature-, or acoustic- sensor, or a combination thereof.

9. A window comprising:

(a) At least one stiffened frameless sash (10) according to any one of claims 6 to 7, wherein the inner glazing surface is separated from the outer glazing surface by a sash thickness, W10,

(b) A fixed frame (20) defining a frame opening having an outer face bounded by an outer frame perimeter mating the outer glazing perimeter and an inner face bounded by an inner frame perimeter mating the inner glazing perimeter, said fixed frame having a frame thickness, W20, measured normal to the outer surface (10a) when the stiffened frameless sash is in the closed position and comprising,

• A fixed frame profile (21) having an inner side and an outer side, and having a frame profile thickness, W21, measured normal to the outer surface (10a) when the stiffened frameless sash is in a closed position, wherein $W21 \leq W20$,
• receiving elements (34f) for interacting with the sash hardware (34) to couple the stiffened frameless sash to the fixed frame in a closed position, closing the frame opening, wherein the inner and outer glazing perimeters of the stiffened frameless sash are coupled to the inner and outer frame perimeters of the fixed frame, respectively,

(c) Sealing elements (3) mounted on the fixed frame and/or on the frameless sash to form a seal between the fixed frame and the stiffened frameless sash when the latter is in the closed position, for sealingly closing the opening when the stiffened frameless sash is in the closed position.

10. Window according to the preceding claim, further comprising a cover plate (22) coupled to and covering at least 10% of a surface area of the outer side of the fixed frame profile over substantially a whole of the outer frame perimeter.

11. Window according to claim 9 or 10, wherein the thickness, W20, of the fixed frame is equal to the sash thickness, W10, of the stiffened frameless sash, within a tolerance of $\pm$ 5%, preferably of $\pm$ 2%, and when the stiffened frameless sash is in the closed position, the inner face of the fixed frame is substantially flush with the inner surface (10b) of the inner glazing (103), and the outer face of the fixed frame is substantially flush with the outer surface (10a) of the outer glazing (101).

12. Window according to any one of claims 9 to 11, wherein the receiving elements are suitable for coupling the stiffened frameless sash (10) to the fixed frame (20) in one of the following manners,

• The stiffened frameless sash is fixedly coupled to the fixed frame in the closed position, or
• The stiffened frameless sash is movingly coupled to the fixed frame such that the sash can reversibly move with respect to the fixed frame (20) from the closed position to an open position wherein the stiffened frameless sash leaves open at least a portion of the frame opening, by rotation of the frameless sash about hinges fixed to the fixed frame and defining at least a rotating axis parallel to the outer surface (10a) when the stiffened frameless sash is in the closed position.

13. Window according to claim 12, which is a casement window comprising

• A first sash (110) which is a stiffened frameless sash according to any one of claims 2 to 7,
• A second sash (210) which is a stiffened frameless sash according to any one of claims 2 to 7,
and which is devoid of mullion between the first and second sashes, wherein
• The first sash (110) is movingly coupled to the fixed frame such that the first sash can reversibly move with respect to the fixed frame (20) from the closed position, wherein the first and second sashes close in combination the frame opening, to an open position wherein the first sash leaves open a first portion of the frame opening by rotation of the first sash about hinges fixed to the fixed frame and defining at least a first rotating axis parallel to the outer surface (10a) of the first sashes when the first sash is in the closed position, and wherein
• The second sash (210) comprises a third profile (41) coupled to the whole length of a middle edge of the second sash, said profile is parallel to the first rotating axe of rotation and , in the closed position, sealingly contacts a corresponding middle edge of the first sash (110), which is parallel to the first rotating axis, wherein the third profile is fixed to the stiffening beam portion of the second profile (31) of the second sash and gives to the middle edge of the second sash a geometry which is complementary to a geometry of the middle edge of the first sash, and the third profile (41) preferably supports a sealing element (3) which sealingly contacts the first wall (31w) of the second peripheral profile (31) of the middle edge of the first sash (110), when the first and second sashes are in the closed position.

14. Window according to claim 13, wherein the second sash (210) either,

• Is fixedly coupled to the fixed frame in the closed position, or

• is movingly coupled to the fixed frame such that the second sash can reversibly move with respect to the fixed frame (20) from the closed position, wherein the first and second sashes close in combination the frame opening, to an open position wherein the second sash leaves open a second portion of the frame opening by rotation of the second sash about hinges fixed to the fixed frame and defining at least a second rotating axis parallel to the at least first rotating axis.

15. An assembly comprising,

• A wall (30) of thickness, W30, separating an inner environment from an outer environment and provided with a through opening in the form of a tunnel (30t) defined by a tunnel perimeter, and
• At least a window according to any one of claims 9 to 14, wherein the fixed frame (20) is sealingly coupled to the tunnel perimeter, with the inner face of the fixed frame facing the inner environment and the outer face facing the outer environment, such that the inner environment is separated from the outer environment by the window when the at least one stiffened frameless sash is in the closed position, wherein the inner face of the fixed frame is preferably flush with the wall at the inner environment and/or the outer face of the fixed frame is preferably flush with the wall at the outer environment.

16. A method for producing a stiffened frameless sash according to any one of claims 1 to 8, comprising the following steps:

(a) Forming a three-glazing unit by stacking an outer glazing (101), an outer peripheral spacer (121), an intermediate glazing (102), an inner peripheral spacer (122), and an inner glazing (103), the inner glazing being separated from the outer glazing by an inner width, W10g, such as,

• to form an outer gap (131) and an inner gap (132) between the intermediate glazing (102) and the outer and inner glazings (101, 103), respectively, and enclosed within the inner and outer peripheral spacers (121, 122), respectively, and
• to define a peripheral volume extending along the whole of the inner and outer glazing perimeters, and comprised between the inner and outer glazings and from the peripheral sides of the inner and outer peripheral spacers to the corresponding inner and outer glazing perimeters, wherein a first peripheral profile (151, 152) is coupled to or is integral with one only of the inner peripheral spacer (122) or of the outer peripheral spacer (121), the first peripheral profile protruding into the peripheral volume and defining a support surface facing outwards, which is transverse, preferably normal to the outer glazing surface (10a) and extends along a whole length of the corresponding inner or outer peripheral spacer,

(b) Filling a portion of the peripheral volume excluding the first peripheral profile (151, 152) with a structural resin (16) defining a resin surface (16s), with a whole of the support surface of the first peripheral profile remaining exposed and free of structural resin or is covered by a layer of the structural resin having a mean thickness of not more than 2 mm, preferably not more than 1 mm.

17. Method according to claim 16, further comprising the steps of,

a) Coupling a second peripheral profile (31) to the support surface, preferably with screws or an adhesive, wherein the second peripheral profile extends over a whole perimeter of the stiffened frameless sash and comprises,

• A stiffening beam portion (31b) comprising an outer peripheral surface facing outwards, and a coupling surface coupled to the support surface of the first peripheral profile (151, 152) or of the layer of the structural resin covering the support surface, the coupling surface extending over at least 55% of the inner width, W10g, preferably at least 67% of W10g, more preferably at least 75% of W10g, and
• a first (31w) and second walls (31x), both protruding outwards from the outer peripheral surface, and substantially parallel to the outer glazing surface (10a), the first and second walls defining a trough (31t) there between facing outwards, the first wall being positioned adjacent to the inner glazing, and

b) Fitting sash hardware (34) into the trough (31t).

**Patentansprüche**

1. Ausgesteifter rahmenloser Flügel (10), umfassend,

(a) eine Außenverglasung (101), die eine Außenverglasungsfläche (10a) definiert, die einen Außenverglasungsbereich aufweist und durch einen Außenverglasungsumfang begrenzt ist,
(b) eine Innenverglasung (103), die eine Innenverglasungsfläche (10b) definiert, die einen Innenverglasungsbereich aufweist, der größer als der oder gleich dem Außenverglasungsbereich ist und durch einen Innenverglasungsumfang begrenzt ist, wobei die Innenverglasung von der Außenverglasung durch eine Innenbreite, W10g, getrennt ist,
(c) eine Zwischenverglasung (102), die sowohl zu der Innen- als auch der Außenverglasung parallel ist und durch einen Zwischenverglasungsumfang begrenzt ist, wobei die Zwischenverglasung zwischen der Innen- und Außenverglasung positioniert ist, getrennt von der Außenverglasung (101) durch einen Außenspalt (131) und von der Innenverglasung (103) durch einen Innenspalt (132),,
(d) einen äußeren peripheren Abstandshalter (121), der die Außenverglasung von der Zwischenverglasung trennt und eine Außenspaltseite umfasst, die einen Außenspaltumfang des Außenspalts definiert, und eine der Außenspaltseite gegenüberliegende periphere Seite umfasst,
(e) einen inneren peripher Abstandshalter (122), der die Innenverglasung von der Zwischenverglasung trennt und eine Innenspaltseite umfasst, die einen Innenspaltumfang des Innenspalts definiert, und eine der Innenspaltseite gegenüberliegende periphere Seite umfasst,
(f) ein peripheres Volumen, das sich entlang der Gesamtheit des Innen- und Außenverglasungsumfangs erstreckt und zwischen der Innen- und Außenverglasung und von den peripheren Seiten der inneren und äußeren peripheren Abstandshalter zu dem entsprechenden Innen- und Außenverglasungsumfang eingeschlossen ist,

**dadurch gekennzeichnet, dass** der ausgesteifte rahmenlose Flügel ferner umfasst,

• ein erstes peripheres Profil (151, 152), das an der peripheren Seite nur eines des inneren peripheren Abstandshalters (122) oder des äußeren peripheren Abstandshalters (121) fixiert oder damit integral ist, wobei das erste periphere Profil in das periphere Volumen ragt und eine nach außen weisende Stützfläche (151s, 152s) definiert, wobei die Stützfläche quer, vorzugsweise normal zur Außenverglasungsfläche (10a) ist und sich über eine gesamte Länge des entsprechenden inneren oder äußeren peripheren Abstandshalter erstreckt, und **dadurch, dass**
• ein Abschnitt des peripheren Volumens mit Ausnahme des ersten peripheren Profils (151, 152) mit einem Strukturharz (16) gefüllt ist, das eine Harzfläche (16s) definiert, wobei eine Gesamtheit der Stützfläche des ersten peripheren Profils freiliegend und frei von Strukturharz bleibt oder durch eine Schicht des Strukturharzes bedeckt ist, die eine mittlere Dicke von nicht mehr als 2 mm, vorzugsweise nicht mehr als 1 mm aufweist.

2. Ausgesteifter rahmenloser Flügel nach Anspruch 1, ferner umfassend ein zweites peripheres Profil (31), das sich über einen gesamten Umfang des ausgesteiften rahmenlosen Flügels erstreckt und mit der Gesamtheit der Stützfläche (151s, 152s) oder der Schicht des Strukturharzes, das die Stützfläche bedeckt, in Kontakt ist, und umfassend,

• einen Aussteifungsträgerabschnitt (31b), der eine nach außen weisende äußere periphere Fläche und eine an der Stützfläche des ersten peripheren Profils (151, 152), vorzugsweise mit Schrauben oder einem Klebstoff, fixierte Kopplungsfläche umfasst, wobei sich die Kopplungsfläche über mindestens 55 % der Innenbreite, W10g, vorzugsweise mindestens 67 % von W10g, stärker bevorzugt mindestens 75 % von W10g und vorzugsweise nicht mehr als 90 % von W10g, erstreckt, und
• eine erste (31w) und zweite Wand (31x), die beide von der äußeren peripheren Fläche nach außen ragen und im Wesentlichen parallel zu der Außenverglasungsfläche (10a) sind, wobei die erste und zweite Wand eine nach außen weisende Mulde (31t) dazwischen definieren, wobei die zweite Wand angrenzend an die Innenverglasung positioniert ist.

3. Ausgesteifter rahmenloser Flügel nach Anspruch 2, wobei das zweite periphere Profil (31) eine dritte Wand umfasst, die im Wesentlichen parallel zu der ersten und zweite Wand (31w, 31x) ist.

4. Ausgesteifter rahmenloser Flügel nach Anspruch 2 oder 3, wobei in einer Projektion auf eine Ebene normal zu der Außenverglasungsfläche (10a) das zweite periphere Profil (31) mindestens 90 % einer Innenspaltbreite (G2) des Innenspalts (132) und mindestens 25 % einer Außenspaltbreite (G1) des Außenspalts (131), vorzugsweise mindestens 50 % der Außenspaltbreite des Außenspalts, abdeckt, wobei die Innen- und Außenspaltbreiten (G1, G2) normal zu der Außenverglasungsfläche (10a) gemessen sind.

5. Ausgesteifter rahmenloser Flügel nach einem der Ansprüche 2 bis 4, wobei das erste periphere Profil und/oder das zweite periphere Profil aus extrudiertem oder stranggezogenem faserverstärktem, vorzugsweise glasfaserverstärktem, Polymerverbundmaterial bestehen, und wobei das zweite periphere Profil vorzugsweise aus einem Material mit einem Elastizitätsmodul, G, von mindestens 5 GPa, vorzugsweise mindestens 15 GPa, und stärker bevorzugt mindestens 30 GPa oder mindestens 50 GPa, besteht, wobei der Elastizitätsmodul in einem Dreipunkt-Biegemodus gemäß ASTM D790-07 gemessen ist.

6. Ausgesteifter rahmenloser Flügel nach einem der Ansprüche 2 bis 5, ferner umfassend Flügelbeschlagelemente (34), die in die Mulde (31t) eingepasst sind, wobei die Flügelbeschlagelemente vorzugsweise an der Mulde mit Schrauben oder Nieten fixiert sind, die sich durch das zweite periphere Profil und durch einen Abschnitt des ersten peripheren Profils erstrecken.

7. Ausgesteifter rahmenloser Flügel nach einem der vorhergehenden Ansprüche, wobei die Innenverglasung (103) und die Außenverglasung (101) ein inneres peripheres Gebiet (143) und ein äußeres peripheres Gebiet (141) umfassen, die sich von einer Kante der Innen- und Außenverglasung entlang der Gesamtheit des Innen- bzw. Außenverglasungsumfangs zu vorzugsweise mindestens den inneren und äußeren peripheren Abstandshaltern (121, 122) in Kontakt mit der entsprechenden Verglasung nach innen erstrecken, wobei die inneren und äußeren peripheren Gebiete eine Durchlässigkeit, TL, von sichtbarem Licht aufweisen, die mindestens 50 % geringer ist als die Innenverglasung (103) und die Außenverglasung (101) außerhalb der jeweiligen inneren und äußeren peripheren Gebiete ist, und vorzugsweise opak ist.

8. Ausgesteifter rahmenloser Flügel nach einem der vorhergehenden Ansprüche, wobei mindestens eine Verglasung (101, 102, 103)

• mit einem Wärmestrahlungsreflexionsfilm und/oder einem Film mit niedrigem Emissionsgrad versehen ist und/oder
• eine interaktive Verglasung bildet und vorzugsweise mit einer elektrochromen Vorrichtung, einer thermochromen Vorrichtung, einer fotochromen Vorrichtung, einer Photovoltaikvorrichtung, einem Multimediaanschluss, einer Antenne, Kommunikationsmitteln, einem Fernseher, einer Lichtquelle einschließlich einer LED, einem Lautsprecher, einem Sensor einschließlich eines Strahlungs-, Temperatur- oder Akustiksensors oder einer Kombination daraus versehen ist.

9. Fenster, umfassend:

(a) mindestens einen ausgesteiften rahmenlosen Flügel (10) nach einem der Ansprüche 6 bis 7, wobei die Innenverglasungsfläche von der Außenverglasungsfläche durch eine Flügeldicke, W10, getrennt ist,
(b) einen fixierten Rahmen (20), der eine Rahmenöffnung definiert, die eine Außenfläche, die durch einen Außenrahmenumfang begrenzt ist, der mit dem Außenverglasungsumfang zusammenpasst, und eine Innenfläche, die durch einen Innenrahmenumfang begrenzt ist, der mit dem Innenverglasungsumfang zusammenpasst, aufweist, wobei der fixierte Rahmen eine Rahmendicke, W20, gemessen normal zur Außenfläche (10a) aufweist, wenn sich der ausgesteifte rahmenlose Flügel in der geschlossenen Position befindet, und umfassend,

• ein fixiertes Rahmenprofil (21), das eine Innenseite und eine Außenseite aufweist und eine Rahmenprofildicke, W21, gemessen normal zur Außenfläche (10a) aufweist, wenn sich der ausgesteifte rahmenlose Flügel in einer geschlossenen Position befindet, wobei W21 ≤ W20,
• Aufnahmeelemente (34f) zum Zusammenwirken mit den Flügelbeschlagelementen (34), um den ausgesteiften rahmenlosen Flügel mit dem fixierten Rahmen in einer geschlossenen Position zu koppeln, wodurch die Rahmenöffnung verschlossen wird, wobei der Innen- und Außenverglasungsumfang des ausgesteiften rahmenlosen Flügels mit dem Innen- bzw. Außenrahmenumfang des fixierten Rahmens gekoppelt sind,

(c) Dichtungselemente (3), die an dem fixierten Rahmen und/oder an dem rahmenlosen Flügel montiert sind, um eine Dichtung zwischen dem fixierten Rahmen und dem ausgesteiften rahmenlosen Flügel zu bilden, wenn sich der letztere in der geschlossenen Position befindet, zum abdichtenden Verschließen der Öffnung, wenn sich der ausgesteifte rahmenlose Flügel in der geschlossenen Position befindet.

10. Fenster nach dem vorhergehenden Anspruch, ferner umfassend eine Abdeckplatte (22), die mit mindestens 10 % eines Flächenbereichs der Außenseite des fixierten Rahmenprofils über im Wesentlichen eine Gesamtheit des Außenrahmenumfangs gekoppelt ist und diesen abdeckt.

11. Fenster nach Anspruch 9 oder 10, wobei die Dicke, W20, des fixierten Rahmens gleich der Flügeldicke, W10, des ausgesteiften rahmenlosen Flügels innerhalb einer Toleranz von ±5 %, vorzugsweise von ±2 %, ist, und wobei, wenn sich der ausgesteifte rahmenlose Flügel in der geschlossenen Position befindet, die Innenfläche des fixierten Rahmens im Wesentlichen bündig mit der Innenfläche (10b) der Innenverglasung (103) ist und die Außenfläche des fixierten Rahmens im Wesentlichen bündig mit der Außenfläche (10a) der Außenverglasung (101) ist.

12. Fenster nach einem der Ansprüche 9 bis 11, wobei die Aufnahmeelemente zum Koppeln des ausgesteiften rahmenlosen Flügels (10) mit dem fixierten Rahmen (20) auf eine der folgenden Arten geeignet sind,

• der ausgesteifte rahmenlose Flügel ist fest mit dem fixierten Rahmen in der geschlossenen Position gekoppelt, oder

• der ausgesteifte rahmenlose Flügel ist derart beweglich mit dem fixierten Rahmen gekoppelt, dass sich der Flügel reversibel in Bezug auf den fixierten Rahmen (20) von der geschlossenen Position zu einer geöffneten Position, in der der ausgesteifte rahmenlose Flügel zumindest einen Abschnitt der Rahmenöffnung offenlässt, durch Drehung des rahmenlosen Flügels um Scharniere bewegen kann, die an dem fixierten Rahmen fixiert sind und mindestens eine Drehachse parallel zu der Außenfläche (10a) bilden, wenn sich der ausgesteifte rahmenlose Flügel in der geschlossenen Position befindet.

13. Fenster nach Anspruch 12, das ein Flügelfenster ist, umfassend

• einen ersten Flügel (110), der ein ausgesteifter rahmenloser Flügel nach einem der Ansprüche 2 bis 7 ist,
• einen zweiten Flügel (210), der ein ausgesteifter rahmenloser Flügel nach einem der Ansprüche 2 bis 7 ist, und das keinen Mittelpfosten zwischen dem ersten und zweiten Flügel aufweist, wobei
• der erste Flügel (110) derart beweglich mit dem fixierten Rahmen gekoppelt ist, dass sich der erste Flügel reversibel in Bezug auf den fixierten Rahmen (20) von der geschlossenen Position, in der die ersten und zweiten Flügel in Kombination die Rahmenöffnung verschließen, zu einer geöffneten Position, in der der erste Flügel einen ersten Abschnitt der Rahmenöffnung offenlässt, durch Drehung des ersten Flügels um Scharniere bewegen kann, die an dem fixierten Rahmen fixiert sind und mindesten eine erste Drehachse parallel zu der Außenfläche (10a) der ersten Flügel definieren, wenn sich der erste Flügel in der geschlossenen Position befindet, und wobei
• der zweite Flügel (210) ein drittes Profil (41) umfasst, das mit der gesamten Länge einer Mittelkante des zweiten Flügels gekoppelt ist, wobei das Profil parallel zu der ersten Drehachse zur Drehung ist und in der geschlossenen Position mit einer entsprechenden Mittelkante des ersten Flügels (110) abdichtend in Kontakt ist, die parallel zu der ersten Drehachse ist, wobei das dritte Profil an dem Aussteifungsträgerabschnitt des zweiten Profils (31) des zweiten Flügels fixiert ist und der Mittelkante des zweiten Flügels eine Geometrie verleiht, die komplementär zu einer Geometrie der Mittelkante des ersten Flügels ist, und wobei das dritte Profil (41) vorzugsweise ein Dichtungselement (3) stützt, das mit der ersten Wand (31w) des zweiten peripheren Profils (31) der Mittelkante des ersten Flügels (110) abdichtend in Kontakt ist, wenn sich die ersten und zweiten Flügel in der geschlossenen Position befinden.

14. Fenster nach Anspruch 13, wobei der zweite Flügel (210) entweder,

• fest mit dem fixierten Rahmen in der geschlossenen Position gekoppelt ist, oder
• derart beweglich mit dem fixierten Rahmen gekoppelt ist, dass sich der zweite Flügel reversibel in Bezug auf den fixierten Rahmen (20) von der geschlossenen Position, in der die ersten und zweiten Flügel in Kombination die Rahmenöffnung verschließen, zu einer geöffneten Position, in der der zweite Flügel einen zweiten Abschnitt der Rahmenöffnung offenlässt, durch Drehung des zweiten Flügels um Scharniere bewegen kann, die an dem fixierten Rahmen fixiert sind und mindesten eine zweite Drehachse parallel zu der mindestens ersten Drehachse definieren.

15. Anordnung, umfassend,

• eine Wand (30) einer Dicke, W30, die eine Innenumgebung von einer Außenumgebung trennt und mit einer Durchgangsöffnung in der Form eines Tunnels (30t) versehen ist, der durch einen Tunnelumfang definiert ist, und
• mindestens ein Fenster nach einem der Ansprüche 9 bis 14, wobei der fixierte Rahmen (20) abdichtend mit dem Tunnelumfang gekoppelt ist, wobei die Innenfläche des fixierten Rahmens der Innenumgebung zugewandt ist und die Außenfläche der Außenumgebung zugewandt ist, so dass die Innenumgebung von der Außenumgebung durch das Fenster getrennt ist, wenn sich der mindestens eine ausgesteifte rahmenlose Flügel in der geschlossenen Position befindet, wobei die Innenfläche des fixierten Rahmens vorzugsweise mit der Wand an der Innenumgebung bündig ist und/oder die Außenfläche des fixierten Rahmens vorzugsweise mit der Wand an der Außenumgebung bündig ist.

16. Verfahren zum Herstellen eines ausgesteiften rahmenlosen Flügels nach einem der Ansprüche 1 bis 8, umfassend die folgenden Schritte:

(a) Ausbilden einer Dreifachverglasungseinheit durch Stapeln einer Außenverglasung (101), eines äußeren peripheren Abstandshalters (121), einer Zwischenverglasung (102), eines inneren peripheren Abstandshalters (122) und einer Innenverglasung (103), wobei die Innenverglasung von der Außenverglasung durch eine Innenbreite, W10g, getrennt ist, um

• einen Außenspalt (131) und einen Innenspalt (132) zwischen der Zwischenverglasung (102) und der Außen- bzw. Innenverglasung (101, 103) und eingeschlossen in dem inneren bzw. äußeren peripheren Abstandshalter (121, 122) zu bilden, und
• ein peripheres Volumen zu definieren, das sich entlang der Gesamtheit des Innen- und Außenverglasungsumfangs erstreckt und zwischen der Innen- und Außenverglasung und von den peripheren Seiten der inneren und äußeren peripheren Abstandshalter zu dem entsprechenden Innen- und Außenverglasungsumfang eingeschlossen ist, wobei ein erstes peripheres Profil (151, 152) mit nur einem des inneren peripheren Abstandshalters (122) oder des äußeren peripheren Abstandshalters (121) gekoppelt ist oder damit integral ist, wobei das erste periphere Profil in das periphere Volumen ragt und eine nach außen weisende Stützfläche definiert, die quer, vorzugsweise normal zur Außenverglasungsfläche (10a) ist und sich über eine gesamte Länge des entsprechenden inneren oder äußeren peripheren Abstandshalters erstreckt,

(b) Füllen eines Abschnitts des peripheren Volumens mit Ausnahme des ersten peripheren Profils (151, 152) mit einem Strukturharz (16), das eine Harzfläche (16s) definiert, wobei eine Gesamtheit der Stützfläche des ersten peripheren Profils freiliegend und frei von Strukturharz bleibt oder durch eine Schicht des Strukturharzes bedeckt ist, die eine mittlere Dicke von nicht mehr als 2 mm, vorzugsweise nicht mehr als 1 mm aufweist.

17. Verfahren nach Anspruch 16, ferner umfassend die Schritte,

a) Koppeln eines zweiten peripheren Profils (31) mit der Stützfläche, vorzugsweise mit Schrauben oder einem Klebstoff, wobei sich das zweite periphere Profil über einen gesamten Umfang des ausgesteiften rahmenlosen Flügels erstreckt und umfasst,

• einen Aussteifungsträgerabschnitt (31b), der eine nach außen weisende äußere periphere Fläche und eine Kopplungsfläche, die mit der Stützfläche des ersten peripheren Profils (151, 152) gekoppelt ist, oder der Schicht des Strukturharzes, die die Stützfläche abdeckt, umfasst, wobei sich die Kopplungsfläche über mindestens 55 % der Innenbreite, W10g, vorzugsweise mindestens 67 % von W10g, stärker bevorzugt mindestens 75 % von W10g erstreckt, und
• eine erste (31w) und zweite Wand (31x), die beide von der äußeren peripheren Fläche nach außen ragen und im Wesentlichen parallel zu der Außenverglasungsfläche (10a) sind, wobei die erste und zweite Wand eine nach außen weisende Mulde (31t) dazwischen definieren, wobei die erste Wand angrenzend an die Innenverglasung positioniert ist, und

b) Einpassen von Flügelbeschlagelementen (34) in die Mulde (31t).

**Revendications**

1. Châssis sans cadre raidi (10) comprenant :

(a) un vitrage extérieur (101) définissant une surface de vitrage extérieur (10a) ayant une aire de vitrage extérieur et délimitée par un périmètre de vitrage extérieur,

(b) un vitrage intérieur (103) définissant une surface de vitrage intérieur (10b) ayant une aire de vitrage intérieur supérieure ou égale à l'aire de vitrage extérieur, et délimitée par un périmètre de vitrage intérieur, le vitrage intérieur étant séparé du vitrage extérieur par une largeur intérieure, W10g,

(c) un vitrage intermédiaire (102) parallèle à la fois au vitrage intérieur et au vitrage extérieur et délimité par un périmètre de vitrage intermédiaire, le vitrage intermédiaire étant placé entre les vitrages intérieur et extérieur, séparé du vitrage extérieur (101) par un interstice extérieur (131) et du vitrage intérieur (103) par un interstice intérieur (132),

(d) un espaceur périphérique extérieur (121) séparant le vitrage extérieur du vitrage intermédiaire et comprenant un côté interstice extérieur définissant un périmètre d'interstice extérieur de l'interstice extérieur, et comprenant un côté périphérique à l'opposé du côté interstice extérieur,

(e) un espaceur périphérique intérieur (122) séparant le vitrage intérieur du vitrage intermédiaire et comprenant un côté interstice intérieur définissant un périmètre d'interstice intérieur de l'interstice intérieur, et comprenant un côté périphérique à l'opposé du côté interstice intérieur,

(f) un volume périphérique s'étendant le long de la totalité des périmètres de vitrage intérieur et extérieur, et s'étendant entre les vitrages intérieur et extérieur et des côtés périphériques des espaceurs périphériques intérieur et extérieur aux périmètres de vitrage intérieur et extérieur correspondants,

**caractérisé en ce que** le châssis sans cadre raidi comprend, en outre :

• un premier profilé périphérique (151, 152) fixé au côté périphérique d'un seul de l'espaceur périphérique intérieur (122) et de l'espaceur périphérique extérieur (121) ou faisant partie intégrante de celui-ci, le premier profilé périphérique faisant saillie dans le volume périphérique et définissant une surface de support (151s, 152s) orientée vers l'extérieur, ladite surface de support étant transversale, de préférence perpendiculaire, à la surface de vitrage extérieur (10a) et s'étendant le long de toute la longueur de l'espaceur périphérique intérieur ou extérieur correspondant, et **en ce que**

• une partie du volume périphérique excluant le premier profilé périphérique (151, 152) est remplie d'une résine structurelle (16) définissant une surface de résine (16s), la totalité de la surface de support du premier profilé périphérique restant exposée et étant dépourvue de résine structurelle ou étant couverte par une couche de la résine structurelle présentant une épaisseur moyenne d'au plus 2 mm, de préférence d'au plus 1 mm.

2. Châssis sans cadre raidi selon la revendication 1, comprenant, en outre, un deuxième profilé périphérique (31) s'étendant sur tout le périmètre du châssis sans cadre raidi et en contact avec la totalité de la surface de support (151s, 152s) ou de la couche de la résine structurelle couvrant la surface de support, et comprenant :

• une partie barre de raidissement (31b) comprenant une surface périphérique extérieure orientée vers l'extérieur, et une surface d'accouplement fixée à la surface de support du premier profilé périphérique (151, 152), de préférence avec des vis ou un adhésif, la surface d'accouplement s'étendant sur au moins 55 % de la largeur intérieure, W10g, de préférence au moins 67 % de W10g, plus préférablement au moins 75 % de W10g, et de préférence sur au plus 90 % de W10g, et

• des première (31w) et deuxième (31x) parois, faisant toutes deux saillie vers l'extérieur à partir de la surface périphérique extérieure, et sensiblement parallèles à la surface de vitrage extérieur (10a), les première et deuxième parois définissant une rainure (31t) entre elles orientée vers l'extérieur, la deuxième paroi étant placée de manière adjacente au vitrage intérieur.

3. Châssis sans cadre raidi selon la revendication 2, dans lequel le deuxième profilé périphérique (31) comprend une troisième paroi sensiblement parallèle aux première et deuxième parois (31w, 31x).

4. Châssis sans cadre raidi selon la revendication 2 ou 3, dans lequel, dans une projection sur un plan perpendiculaire à la surface de vitrage extérieur (10a), le deuxième profilé périphérique (31) couvre au moins 90 % d'une largeur d'interstice intérieur (G2) de l'interstice intérieur (132) et au moins 25 % d'une largeur d'interstice extérieur (G1) de l'interstice extérieur (131), de préférence au moins 50 % de la largeur d'interstice extérieur de l'interstice extérieur, les largeurs d'interstices intérieur et extérieur (G1, G2) étant mesurées perpendiculairement à la surface de vitrage extérieur (10a).

5. Châssis sans cadre raidi selon l'une quelconque des revendications 2 à 4, dans lequel le premier profilé périphérique et/ou le deuxième profilé périphérique sont faits d'un composite polymère renforcé avec des fibres extrudé ou pultrudé, de préférence renforcé avec des fibres de verre, et dans lequel le deuxième profilé périphérique est fait, de préférence, d'un matériau présentant un module en flexion, G, d'au moins 5 GPa, de préférence, d'au moins 15 GPa et, plus préférablement, d'au moins 30 GPa ou d'au moins 50 GPa, le module en flexion étant mesuré par un essai de flexion en trois points selon ASTM D790-07.

6. Châssis sans cadre raidi selon l'une quelconque des revendications 2 à 5, comprenant, en outre, des pièces de serrurerie de châssis (34), insérées dans la rainure (31t), dans lequel les pièces de serrurerie de châssis sont, de préférence, fixées à la rainure au moyen de vis ou de rivets s'étendant à travers le deuxième profilé périphérique et à travers une partie du premier profilé périphérique.

7. Châssis sans cadre raidi selon l'une quelconque des revendications précédentes, dans lequel le vitrage intérieur (103) et le vitrage extérieur (101) comprennent une région périphérique intérieure (143) et une région périphérique extérieure (141) s'étendant vers l'intérieur à partir d'un bord des vitrages intérieur et extérieur, le long de la totalité respectivement des périmètres de vitrage intérieur et extérieur, de préférence au moins jusqu'aux espaceurs périphériques intérieur et extérieur (121, 122) en contact avec le vitrage correspondant, dans lequel les régions périphériques intérieure et extérieure présentent une transmission de la lumière visible, TL, inférieure d'au moins 50 % à celle du vitrage intérieur (103) et du vitrage extérieur (101) hors des régions périphériques intérieure et extérieure respectives et sont, de préférence, opaques.

8. Châssis sans cadre raidi selon l'une quelconque des revendications précédentes, dans lequel au moins un vitrage (101, 102, 103)

   • est pourvu d'un film réfléchissant les rayons thermiques et/ou d'un film à faible émissivité, et/ou
   • forme un vitrage interactif et est, de préférence, pourvu d'un dispositif électrochromique, d'un dispositif thermochromique, d'un dispositif photochromique, d'un dispositif photovoltaïque, d'une connexion multimédia, d'une antenne, de moyens de communication, d'un téléviseur, d'une source de lumière comprenant une DEL, d'un haut-parleur, d'un capteur comprenant un capteur d'éclairement énergétique, de température ou acoustique, ou d'une combinaison de ceux-ci .

9. Fenêtre comprenant :

   (a) au moins un châssis sans cadre raidi (10) selon l'une quelconque des revendications 6 et 7, la surface de vitrage intérieur étant séparée de la surface de vitrage extérieur par une épaisseur de châssis, W10,
   (b) un cadre fixe (20) définissant une ouverture de cadre comportant une face extérieure délimitée par un périmètre de cadre extérieur épousant le périmètre de vitrage extérieur et une face intérieure délimitée par un périmètre de cadre intérieur épousant le périmètre de vitrage intérieur, ledit cadre fixe présentant une épaisseur de cadre, W20, mesurée perpendiculairement à la surface extérieure (10a) lorsque le châssis sans cadre raidi se trouve dans la position fermée et comprenant

      • un profilé de cadre fixe (21) comportant un côté intérieur et un côté extérieur, et présentant une épaisseur de profilé de cadre, W21, mesurée perpendiculairement à la surface extérieure (10a) lorsque le châssis sans cadre raidi se trouve dans une position fermée, où W21 ≤ W20,
      • des éléments de réception (34f) destinés à interagir avec les pièces de serrurerie de châssis (34) pour accoupler le châssis sans cadre raidi au cadre fixe dans une position fermée, fermant l'ouverture de cadre, les périmètres de vitrage intérieur et extérieur du châssis sans cadre raidi étant respectivement accouplés aux périmètres de cadre intérieur et extérieur du cadre fixe,

   (c) des éléments d'étanchéité (3) installés sur le cadre fixe et/ou sur le châssis sans cadre de façon à former un joint étanche entre le cadre fixe et le châssis sans cadre raidi lorsque ce dernier se trouve dans la position fermée, afin de fermer de manière étanche l'ouverture lorsque le châssis sans cadre raidi se trouve dans la position fermée.

10. Fenêtre selon la revendication précédente, comprenant, en outre, une plaque de recouvrement (22) accouplée au côté extérieur du profilé de cadre fixe et couvrant au moins 10 % d'une superficie de celui-ci, sensiblement sur la totalité du périmètre de cadre extérieur.

11. Fenêtre selon la revendication 9 ou 10, dans laquelle l'épaisseur, W20, du cadre fixe est égale à l'épaisseur de châssis, W10, du châssis sans cadre raidi, avec une tolérance de ± 5 %, de préférence de ± 2 % et, lorsque le châssis sans cadre raidi se trouve dans la position fermée, la face intérieure du cadre fixe est sensiblement de niveau avec la surface intérieure (10b) du vitrage intérieur (103), et la face extérieure du cadre fixe est sensiblement de niveau avec la surface extérieure (10a) du vitrage extérieur (101).

12. Fenêtre selon l'une quelconque des revendications 9 à 11, dans laquelle les éléments de réception sont propres à accoupler le châssis sans cadre raidi (10) au cadre fixe (20) de l'une des façons suivantes :

- le châssis sans cadre raidi est accouplé fixement au cadre fixe dans la position fermée, ou
- le châssis sans cadre raidi est accouplé de manière mobile au cadre fixe de telle sorte que le châssis peut se déplacer de manière réversible par rapport au cadre fixe (20) de la position fermée à une position ouverte dans laquelle le châssis sans cadre raidi laisse au moins une partie de l'ouverture de cadre ouverte, par rotation du châssis sans cadre autour de charnières fixées au cadre fixe et définissant au moins un axe de rotation parallèle à la surface extérieure (10a) lorsque le châssis sans cadre raidi se trouve dans la position fermée.

13. Fenêtre selon la revendication 12, qui est une fenêtre à vantaux comprenant :

- un premier châssis (110) qui est un châssis sans cadre raidi selon l'une quelconque des revendications 2 à 7,
- un second châssis (210) qui est un châssis sans cadre raidi selon l'une quelconque des revendications 2 à 7, et qui est dépourvue de meneau entre les premier et second châssis, dans laquelle
- le premier châssis (110) est accouplé de manière mobile au cadre fixe de telle sorte que le premier châssis peut se déplacer de manière réversible par rapport au cadre fixe (20) de la position fermée, dans laquelle les premier et second châssis ferment conjointement l'ouverture de cadre, à une position ouverte, dans laquelle le premier châssis laisse une première partie de l'ouverture de cadre ouverte, par rotation du premier châssis autour de charnières fixées au cadre fixe et définissant au moins un premier axe de rotation parallèle à la surface extérieure (10a) du premier châssis lorsque le premier châssis se trouve dans la position fermée, et dans laquelle
- le second châssis (210) comprend un troisième profilé (41) accouplé à la totalité de la longueur d'un bord médian du second châssis, ledit profilé étant parallèle au premier axe de rotation et, dans la position fermée, étant en contact de manière étanche avec un bord médian correspondant du premier châssis (110), qui est parallèle au premier axe de rotation, le troisième profilé étant fixé à la partie barre de raidissement du deuxième profilé (31) du second châssis et donnant au bord médian du second châssis une géométrie qui est complémentaire d'une géométrie du bord médian du premier châssis, et le troisième profilé (41) supportant, de préférence, un élément d'étanchéité (3) qui est en contact de manière étanche avec la première paroi (31w) du deuxième profilé périphérique (31) du bord médian du premier châssis (110) lorsque les premier et second châssis se trouvent dans la position fermée.

14. Fenêtre selon la revendication 13, dans laquelle le second châssis (210)

- est accouplé fixement au cadre fixe dans la position fermée, ou
- est accouplé de manière mobile au cadre fixe de telle sorte que le second châssis peut se déplacer de manière réversible par rapport au cadre fixe (20) de la position fermée, dans laquelle les premier et second châssis ferment conjointement l'ouverture de cadre, à une position ouverte, dans laquelle le second châssis laisse une seconde partie de l'ouverture de cadre ouverte, par rotation du second châssis autour de charnières fixées au cadre fixe et définissant au moins un second axe de rotation parallèle à l'au moins un premier axe de rotation.

15. Ensemble comprenant :

- un mur (30), d'épaisseur W30, séparant un environnement intérieur d'un environnement extérieur et pourvu d'une ouverture traversante sous la forme d'un tunnel (30t) défini par un périmètre de tunnel, et
- au moins une fenêtre selon l'une quelconque des revendications 9 à 14, le cadre fixe (20) étant accouplé de manière étanche au périmètre de tunnel, avec la face intérieure du cadre fixe orientée vers l'environnement intérieur et la face extérieure orientée vers l'environnement extérieur, de telle sorte que l'environnement intérieur est séparé de l'environnement extérieur par la fenêtre lorsque l'au moins un châssis sans cadre raidi se trouve dans la position fermée, la face intérieure du cadre fixe étant, de préférence de niveau avec le mur du côté de l'environnement intérieur et/ou la face extérieure du cadre fixe étant, de préférence, de niveau avec le mur du côté de l'environnement extérieur.

16. Procédé de production d'un châssis sans cadre raidi selon l'une quelconque des revendications 1 à 8, comprenant les étapes suivantes :

(a) former une unité à triple vitrage en superposant un vitrage extérieur (101), un espaceur périphérique extérieur (121), un vitrage intermédiaire (102), un espaceur périphérique intérieur (122) et un vitrage intérieur (103), le vitrage intérieur étant séparé du vitrage extérieur par une largeur intérieure, W10g, de façon à

• former un interstice extérieur (131) et un interstice intérieur (132) entre le vitrage intermédiaire (102) et, respectivement, les vitrages extérieur et intérieur (101, 103), délimités par le côté intérieur des espaceurs périphériques intérieur et extérieur (121, 122), respectivement, et

• définir un volume périphérique s'étendant le long de la totalité des périmètres de vitrage intérieur et extérieur, et s'étendant entre les vitrages intérieur et extérieur et des côtés périphériques des espaceurs périphériques intérieur et extérieur aux périmètres de vitrage intérieur et extérieur correspondants, un premier profilé périphérique (151, 152) étant accouplé à un seul de l'espaceur périphérique intérieur (122) et de l'espaceur périphérique extérieur (121) ou faisant partie intégrante de celui-ci, le premier profilé périphérique faisant saillie dans le volume périphérique et définissant une surface de support orientée vers l'extérieur, qui est transversale, de préférence perpendiculaire, à la surface de vitrage extérieur (10a) et s'étend le long de toute la longueur de l'espaceur périphérique intérieur ou extérieur correspondant,

(b) remplir une partie du volume périphérique excluant le premier profilé périphérique (151, 152) avec une résine structurelle (16) définissant une surface de résine (16s), la totalité de la surface de support du premier profilé périphérique restant exposée et dépourvue de résine structurelle ou étant couverte par une couche de la résine structurelle présentant une épaisseur moyenne d'au plus 2 mm, de préférence d'au plus 1 mm.

**17.** Procédé selon la revendication 16, comprenant, en outre, les étapes suivantes :

(a) accoupler un deuxième profilé périphérique (31) à la surface de support, de préférence avec des vis ou un adhésif, le deuxième profilé périphérique s'étendant sur tout le périmètre du châssis sans cadre raidi et comprenant :

• une partie barre de raidissement (31b) comprenant une surface périphérique extérieure orientée vers l'extérieur, et une surface d'accouplement accouplée à la surface de support du premier profilé périphérique (151, 152) ou à la couche de la résine structurelle couvrant la surface de support, la surface d'accouplement s'étendant sur au moins 55 % de la largeur intérieure, W10g, de préférence au moins 67 % de W10g, plus préférablement au moins 75 % de W10g, et

• des première (31w) et deuxième (31x) parois, faisant toutes deux saillie vers l'extérieur à partir de la surface périphérique extérieure, et sensiblement parallèles à la surface de vitrage extérieur (10a), les première et deuxième parois définissant une rainure (31t) entre elles orientée vers l'extérieur, la première paroi étant placée de manière adjacente au vitrage intérieur, et

(b) insérer des pièces de serrurerie de châssis (34) dans la rainure (31t).

**FIG.1(a)**

**FIG.1(b)**

W10

W10g

G1    G2

**FIG.1(c)**

33

34

W10

101    102    103

10b

10a

121

131    132

122

152

31

33

34

34s

**FIG.1(d)**

10

FIG.2(a)

FIG.2(b)

W10

101    102    103

10a    10b

121    10

141    131    132    122

151    143

152

151s    31

33    32

**FIG.2(c)**

W10

101    102    103

10a    10b

121    10

141    131    132    122

151    143

152

35f    31

33    35a

32

**FIG.2(d)**

**FIG.3(a)**

**FIG.3(b)**

W10

W10g

20

20

**FIG.4(a)**

W22

W21

W20

10

3

34f

34s

22

3

21

20

**FIG.4(b)**

FIG.4(c)

FIG.4(d)

**FIG.5(a)**

101  102  103

10a

121  131  132

10b

122

152

35a

35a

32

10

16

31

34s

**FIG.5(b)**

3

34f

3

21

22

20

**FIG.6(a)**

**FIG.6(b)**

**FIG.6(c)**

**FIG.6(d)**

FIG.7(a)

(i)

(ii)

FIG.7(a) (contd)

(iii)

(iv)

FIG.7(b)

FIG.7(c)

W10

W10g

10

**FIG.8(a)**

110

10

101

103

41

3

34s   35a

101

34s

103

**FIG.8(b)**

210

110

101    103

41  35a
        3
101        34s

103    **FIG.8(c)**

34s

210

110

101    103

3    41
        3
101        34s

34s

103    **FIG.8(d)**

210

**FIG.8(e)**

**FIG.8(f)**

**FIG.8(g)**

**FIG.8(h)**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3228795 A
- EP 2436865 A
- DE 19509206
- WO 2018054655 A
- WO 2016050839 A
- EP 3299563 A
- EP 1528213 A
- WO 2015150207 A
- WO 2015150403 A
- WO 2016091672 A
- WO 2016169823 A
- WO 2018001965 A